(19) Europäisches Patentamt
European Patent Office
Office européen des brevets

(11) EP 0 765 895 A2

## (12) EUROPEAN PATENT APPLICATION

(43) Date of publication:
02.04.1997 Bulletin 1997/14

(51) Int Cl.$^6$: C08G 75/02, H01B 3/30

(21) Application number: 96306817.6

(22) Date of filing: 19.09.1996

(84) Designated Contracting States:
DE FR GB

(30) Priority: 21.09.1995 JP 269383/95
21.06.1996 JP 181145/96
29.08.1996 JP 247234/96

(71) Applicant: KUREHA KAGAKU KOGYO KABUSHIKI KAISHA
Chuo-ku Tokyo 103 (JP)

(72) Inventors:
• Nishihata, Naomitsu, c/o Nishiki Res. Lab.
Nishiki-machi, Iwaki-shi, Fukushima-ken (JP)
• Ouchi, Kiyomi, c/o Nishiki Res. Lab.
Nishiki-machi, Iwaki-shi, Fukushima-ken (JP)
• Tada, Masahito, c/o Nishiki Res. Lab.
Nishiki-machi, Iwaki-shi, Fukushima-ken (JP)
• Satake, Yoshikatsu, c/o Nishiki Res. Lab.
Nishiki-machi, Iwaki-shi, Fukushima-ken (JP)

(74) Representative: Jones, Helen Marjorie Meredith
Gill Jennings & Every,
Broadgate House,
7 Eldon Street
London EC2M 7LH (GB)

(54) **Metal coating resin and coated metal member**

(57) Disclosed herein are a metal coating resin comprising a branched poly(arylene sulfide) resin obtained by polymerizing an alkali metal sulfide and a dihalo-aromatic compound in the presence of a trihalo-aromatic compound, wherein the poly(arylene sulfide) resin has a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \quad (1),$$

a coated metal member obtained by coating a metal base with the resin, and a production process thereof. A coated metal member obtained by coating a metal base with a poly(arylene sulfide) resin, wherein the poly (arylene sulfide) resin has an elongational viscosity of at least 10,000 Pa·s as measured at 310°C and a shear rate of 400/sec, and a crystallization temperature upon heating of a coating layer formed of the poly(arylene sulfide) resin, which is measured by means of a differential scanning calorimeter, is lower by at least 6°C than that of an unorientated noncrystalline sheet of the poly (arylene sulfide) resin, and a production process thereof are also disclosed.

EP 0 765 895 A2

## Description

FIELD OF THE INVENTION

The present invention relates to a metal coating resin and coated metal members, and more particularly to a metal coating resin composed of a poly(arylene sulfide) resin excellent in heat resistance, Freon resistance, flame retardancy, chemical resistance, radiation resistance, low-temperature properties, electrical insulating properties, mechanical properties and the like, and coated metal members covered with such a resin.

The metal coating resin and coated metal members according to the present invention are used in wide fields such as conduit tubes and inner cables for control cables in automobiles or ships, windings for heat-resistant coils or motors, solenoid lead wires for automobiles, Freon-resistant wires for compressors and the like, windings for transformers, radiation-resistant equipment wirings for nuclear power plants, cables, magnet wires, metal rods, metal tubes, other heat-resistant wires, sheaths, and wires.

BACKGROUND OF THE INVENTION

Poly(arylene sulfide) resins (hereinafter abbreviated as "PAS resins") typified by poly(phenylene sulfide) resins (hereinafter abbreviated as "PPS resins") are used in wide fields as engineering plastics excellent in heat resistance, chemical resistance, flame retardance, electrical insulating properties and the like. The PAS resins are expected to be used as resins for coating wires, metal rods and the like making the best use of such excellent properties, and specific proposals have been made.

For example, Japanese Patent Application Laid-Open No. 185306/1985 has proposed to melt-extrude a PPS resin, which has a melt viscosity of 300-100,000 poises as measured at 310°C and a shear rate of 200/sec and a primary draw ratio of at least 10 times when melt-extruded at 310°C through a nozzle having a bore diameter of 0.5 mm to spin, on a metallic conductor wire to produce an enameled wire type coated wire. Japanese Patent Application Laid-Open No. 143307/1987 has proposed an insulated wire formed by extruding a PPS resin composition having a melt index of 0.5-100 g/10 min on a conductor.

However, when a PAS resin is melt-extruded on a metal base such as a metallic conductor wire to continuously form a coating layer, breaking of the extruded resin or the like tends to occur because of poor stretchability of the resin. Therefore, difficulty has been encountered on the stable provision of a coated product. Besides, when the metal member coated with the PAS resin has been exposed to a high temperature to crystallize the resin after the coating, there has been a problem that the coating layer becomes cracked.

When a metal base is continuously coated with a resin by a melt-extrusion process, the resin is generally stretched in a molten state. At this time, there is need for stably obtaining an even coating layer without any breaking of the extruded resin. It is also necessary to cause no cracking in the coating layer even when the coating layer is subjected to a heat treatment after the coating. However, there has not been found under the circumstances any metal coating PAS resin having properties suitable for application fields such as coated wires.

OBJECTS AND SUMMARY OF THE INVENTION

It is an object of the present invention to provide a metal coating PAS resin, by which when a metal base is continuously coated with the resin by a melt-extrusion process, the resin can be stably continuously applied without any breaking of the resin, and the resulting coating layer undergoes no cracking even when subjected to a heat treatment after the coating.

Another object of the present invention is to provide a coated metal member on which a coating layer composed of a PAS resin excellent in heat resistance, Freon resistance, flame retardancy, chemical resistance, radiation resistance, low-temperature properties, electrical insulating properties, mechanical properties and the like has been formed.

The present inventors have carried out an extensive investigation with a view toward overcoming the above-described problems involved in the prior art. As a result, it has been found that when a resin selected from branched PAS resins obtained by polymerizing an alkali metal sulfide and a dihalo-aromatic compound in the presence of a trihalo-aromatic compound and having a melt viscosity within a specific range and specific melt properties is used, the resin exhibits excellent processability without causing any breaking of the resin even when stretched upon melt coating of the resin on a metal base, and the coating layer undergoes no cracking even when subjected to a heat treatment to crystallize the resin after the coating.

The present inventors have also found that when a PAS resin having a specific elongational viscosity is used, and a crystallization temperature upon heating of a coating layer (coating film) formed of the PAS resin, which is measured by means of a differential scanning calorimeter (DSC), is made lower by at least 6°C than that of an unoriented noncrystalline sheet formed of the PAS resin by selecting conditions for coating the metal base, the above described objects can be achieved. In this case, the strength at 10% strain of the coating layer formed of the PAS resin is preferably at least 0.93 times the yield strength of the coating layer. The selection of such coating conditions permits the provision of a coating layer which undergoes no cracking even when subjected to a heat treatment to crystallize the PAS resin after the coating and retains an elongation of at least 30% even after subjected to a severe heat aging test or heat history under heat-treating conditions. In this case, the PAS resin may be a completely linear resin. It is however preferable that the resin be a branched PAS resin obtained by polymerizing an alkali metal sulfide and a dihalo-aromatic compound in the presence of a trihalo-aromatic compound as described above.

Coated metal members such as coated wires, which have been covered with such a selected PAS resin, not only exhibit excellent properties inherent in the PAS resin, such as excellent heat resistance, flame retardancy, chemical resistance, Freon resistance, radiation resistance, electrical insulating properties and low-temperature properties, but also are excellent in properties such as flexing resistance, tensile properties, flexibility and weather resistance. The present invention has been led to completion on the basis of these findings.

According to the present invention, there is thus provided a metal coating resin comprising a branched PAS resin obtained by polymerizing an alkali metal sulfide and a dihalo-aromatic compound in the presence of a trihalo-aromatic compound, wherein the PAS resin has a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \tag{1}$$

According to the present invention, there is also provided a coated metal member obtained by coating a metal base with a metal coating resin comprising a branched PAS resin obtained by polymerizing an alkali metal sulfide and a dihalo-aromatic compound in the presence of a trihalo-aromatic compound, wherein the PAS resin has a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \tag{1}$$

According to the present invention, there is further provided a coated metal member obtained by coating a metal base with a PAS resin, wherein the PAS resin has an elongational viscosity of at least 10,000 Pa·s as measured at 310°C and a shear rate of 400/sec, and a crystallization temperature upon heating of a coating layer formed of the PAS resin, which is measured by means of a differential scanning calorimeter, is lower by at least 6°C than that of an unorientated noncrystalline sheet of the PAS resin.

## BRIEF DESCRIPTION OF THE DRAWING

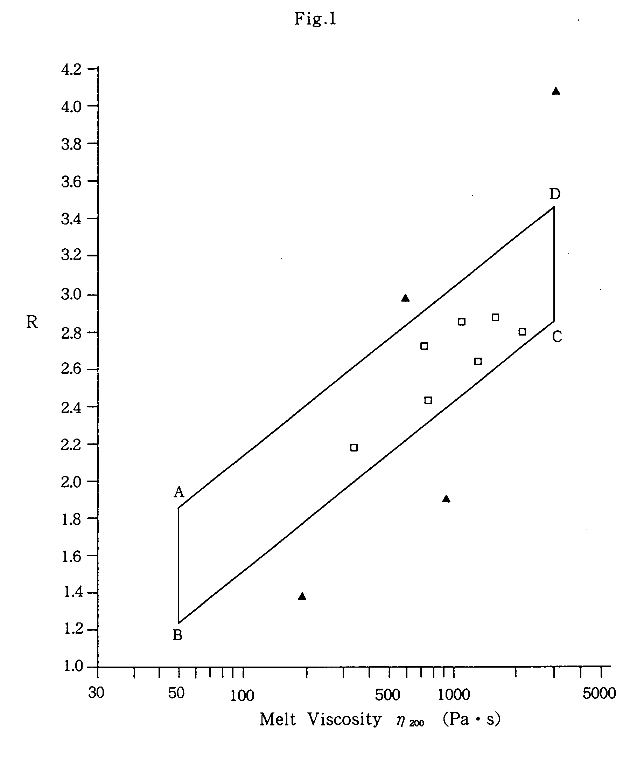

Fig. 1 is a graph illustrating a relationship between a melt viscosity $\eta_{200}$ and an R ($\eta_{200}/\eta_{1200}$) value of a PAS resin. A range satisfying the relationship (1) is within an area enclosed by a line connecting points A, B, C and D in Fig. 1.

## DETAILED DESCRIPTION OF PREFERRED EMBODIMENTS

<u>Metal member coated with branched PAS resin:</u>

The first feature of the present invention resides in that the following specifically selected PAS resin is used as a metal coating resin.

1. The resin is a branched PAS resin obtained by polymerizing an alkali metal sulfide and a dihalo-aromatic compound in the presence of a trihalo-aromatic compound.
2. Its melt viscosity $\eta_{200}$ as measured at 310°C and a shear rate of 200/sec falls within a range satisfying the following relationship (2):

$$50 \text{ Pa·s} \leq \eta_{200} \leq 3,000 \text{ Pa·s} \tag{2}$$

3. A ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \qquad (1)$$

The present inventors have proceeded with an extensive investigation as to continuous coating with a PAS resin on a metal base. As a result, it has been found that when the select PAS resin satisfying the requirements 1-3 is used, melt-coating processing can be performed stably, and a coated product having excellent mechanical properties can be obtained.

The PAS resin useful in the practice of the present invention is not a completely linear resin obtained from only an alkali metal sulfide and a dihalo-aromatic compound, but a branched resin obtained by causing a small amount of a trihalo-aromatic compound, which is a trifunctional monomer, to coexist with the above components. The PAS resin satisfying the relationship (1) can be obtained by making a resin branched. In addition, when coating on a metal base is conducted with such a resin, excellent processability and mechanical properties can be achieved. On the other hand, a crosslinked resin obtained by subjecting a low molecular weight PAS resin to oxidative crosslinking (curing) in the presence of oxygen undergoes gelation upon its melting and stretching and is hence poor in processability, and besides has poor utility from the standpoints of strength of the resulting coating layer, adhesion to the metal base, wear resistance, resistance to dielectric breakdown, heat resistance and the like.

The PAS resin used in the present invention has a melt viscosity $\eta_{200}$ of 50-3,000 Pa·s, preferably 200-2,500 Pa·s, more preferably 300-2,000 Pa·s as measured at 310°C and a shear rate of 200/sec. If the melt viscosity $\eta_{200}$ is lower than 50 Pa·s, the elasticity of such a PAS resin in a molten state becomes poor when extruded through an extruder, resulting in difficulty in stretching it. If the melt viscosity $\eta_{200}$ exceeds 3,000 Pa·s, the PAS resin markedly undergoes gelation, resulting in deteriorated processability, and moreover reduction in the flexing resistance and flexibility of the resulting coating.

The PAS resin used in the present invention requires to satisfy the relationship (1). If R ($\eta_{200}/\eta_{1200}$) falls within a range represented by the following inequality (3), the elasticity of such a PAS resin in a molten state becomes poor when extruded through an extruder, resulting in difficulty in adequate draw.

$$0.91 \times \log(\eta_{200}) - 0.3 > R \qquad (3)$$

If R falls within a range represented by the following inequality (4), difficulty is encountered on even stretching, so that many irregular uneven portions occur in the resulting coating layer.

$$R > 0.91 \times \log(\eta_{200}) + 0.3 \qquad (4)$$

Fig. 1 diagrammatically illustrates the relationship between the melt viscosity $\eta_{200}$ (axis of abscissa) and the R value (axis of ordinate) of the PAS resin. The PAS resin used in the present invention falls within a range enclosed by points A, B, C and D in Fig. 1. In Fig. 1, white square marks indicate the property values plotted as to resins obtained in Synthesis Examples 1-7 (Examples), while black triangle marks denote the property values plotted as to resins obtained in Synthesis Examples 8-11 (Comparative Examples).

A PAS resin having the melt viscosity and melt properties as described above can be obtained by suitably controlling proportions of individual monomers and polymerization conditions upon polymerizing an alkali metal sulfide and a dihalo-aromatic compound in the presence of a trihalo-aromatic compound.

Examples of the alkali metal sulfide include sodium sulfide, potassium sulfide, lithium sulfide, rubidium sulfide, cesium sulfide and mixtures of two or more of these compounds. The alkali metal sulfide may be formed in situ in a reaction vessel in accordance with a method known per se in the art. These alkali metal sulfides can be used as hydrates or aqueous mixtures, or in anhydrous forms. A small amount of an alkali metal hydroxide may be added to react with an alkali metal bisulfide and an alkali metal thiosulfate present in a trace amount in the alkali metal sulfide, thereby removing these impurities or converting them into the sulfide. Among these, sodium sulfide is industrially preferred because it is cheapest.

Examples of the dihalo-aromatic compound include dihalobenzenes such as p-dichlorobenzene, m-dichlorobenzene and p-dibromobenzene; substituted dihalo-aromatic compounds such as 2,5-dichlorotoluene and 1-methoxy-2,5-dichlorobenzene; dihalonaphthalene such as 1,4-dichloronaphthalene; dihalobiphenyls such as 4,4'-dichlorobiphenyl and 3,3'-dichlorobiphenyl; dihalobenzoic acids such as 3,5-dichlorobenzoic acid; dihalobenzophenones such as 4,4'-dichlorobenzophenone; dihalodiphenyl sulfones such as 4,4'-dichlorodiphenyl sulfone and 3,3'-dichlorodiphenyl sulfone; and dihalophenyl ethers such as 4,4'-dichlorodiphenyl ether. Among these, the dihalobenzenes are preferred from the viewpoint of economy, physical properties and the like, with p-dihalobenzenes such as p-dichlorobenzene being more preferred. Those containing p-dichlorobenzene in a proportion of preferably at least 70 wt.%, more preferably at least 80 wt.%, still more preferably at least 90 wt.% are particularly preferred.

Examples of the trihalo-aromatic compound include trihalobenzenes such as 1,2,3-trichlorobenzene, 1,2,3-tribromobenzene, 1,2,4-trichlorobenzene, 1,2,4-tribromobenzene, 1,3,5-trichlorobenzene, 1,3,5-tribromobenzene and 1,3-dichloro-5-bromobenzene; alkyl-substituted trihalobenzenes; and mixtures of these compounds. Among these, 1,2,4-trihalobenzenes, 1,3,5-trihalobenzenes and 1,2,3-trichlorobenzene are preferred from the viewpoint of economy, reactivity, physical properties and the like.

As a preparation process of the poly(arylene sulfide) resin, there may be used a process wherein the alkali metal sulfide and the dihalo-aromatic compound are subjected to a polycondensation reaction in the presence of the trihalo-aromatic compound in a polar organic solvent containing water. Examples of the water include water of hydration in the alkali metal sulfide, water to be added, water formed in the reaction and water in an aqueous solution of the alkali metal sulfide. As illustrative organic amide solvents, may be mentioned N-methylpyrrolidone, N-ethylpyrrolidone, N,N-dimethylformamide, N,N-dimethylacetamide, N-methylcaprolactam, dimethylimidazolidinone, tetramethylurea and hexamethylphosphoric amide. Among these, N-methyl-2-pyrrolidone (NMP) is particularly preferred from the viewpoint of economy and stability.

A ratio a/b of the number of moles a of the dihalo-aromatic compound charged to the number of moles b of the alkali metal sulfide charged is controlled so as to fall within a range of generally 0.95-1.10, preferably 0.98-1.08, more preferably 1.00-1.06. The trihalo-aromatic compound is added to the polymerization reaction system under control so as to fall within a range of generally 0.0002-0.01 moles, preferably 0.0004-0.009 moles, more preferably 0.0005-0.007 moles per mole of the alkali metal sulfide charged.

If the amount of the trihalo-aromatic compound is less than 0.0002 moles per mole of the alkali metal sulfide charged, the elasticity of the resulting PAS resin becomes insufficient in a molten state, so that the resin fails to adequate orientate when directly stretched in the molten state. Therefore, the mechanical properties of a coating layer to be formed is lowered. On the other hand, if the amount of the trihalo-aromatic compound exceeds 0.01 moles, the melt viscosity of the resulting PAS resin becomes high, so that breaking of resin occurs upon coating, resulting in difficulty in continuously obtaining an even coated product. Thus, amounts outside the above range are not preferred. The trihalo-aromatic compound may be added to the polymerization reaction system either in the initial stage or in the final stage of polymerization. However, the addition in the initial stage is more effective even in the addition in a less amount.

No particular limitation is imposed on the polymerization process, and any conventional process may be used. As a specific example thereof, may be mentioned a process in which the reaction is conducted at a temperature of 150-235°C in the presence of water in a proportion of 0.5-2.4 moles per mole of the alkali metal sulfide charged so as to give a conversion of the dihalo-aromatic compound of about 50-98 mol%, and the temperature of the reaction system is then raised to 245-280°C in a state that water is caused to exist in a proportion of 2.5-7.0 moles per mole of the alkali metal sulfide charged in the reaction system to continue the reaction. The amount of the polar organic solvent to be used is generally 0.2-2.0 kg, preferably 0.3-1.0 kg per mole of the alkali metal sulfide.

In order to continuously conduct the coating of a metal base with the PAS resin, the resin is melted at a temperature not lower than the melting point of this resin, preferably a temperature ranging from (the melting point + 5°C) to 370°C, more preferably a temperature ranging from (the melting point + 20°C) to 350°C by means of an extruder, and then applied to the metal base on the outside of a die while forming a parison. During the coating process, the metal body to be coated (i.e., a metal member to be coated) is taken off at a fixed rate by pinch rollers, and an even coating layer is continuously formed on the metal base at the time it has passed through the die. The coated metal body is then cooled in a cooling zone and generally taken up by a take-up machine or the like.

In the present invention, in order to control the crystallinity and mechanical properties of the coating layer to obtain a desired coated metal body, a heating zone may be optionally provided between the die of the extruder through which the molten resin is extruded to form a parison, thereby coating the metal base, and the pinch rollers to heat-treat the coated metal body. The heat-treating temperature for the coated metal body is generally 120-290°C, preferably 130-270°C. The heat-treating time (namely, residence time in the heating zone) varies according to productivity, the thickness of the coating layer, take-off speed, and the crystallization rate and crystallization temperature of the resin and can hence not be specified unqualifiedly. However, it is generally not shorter than 0.1 seconds but not longer than 10 minutes.

In the present invention, the coated metal body taken up once may also be optionally heat-treated in order to control the crystallinity and mechanical properties of the coating layer to obtain a desired coated metal body. In this case, the heat-treating temperature for the coated metal body is within a range of generally 120-290°C, preferably 130-270°C. The heat-treating time varies according to productivity, the thickness of the coating layer, take-off speed, and the crystallization rate and crystallization temperature of the resin and can hence not be specified unqualifiedly. However, it is generally not shorter than 1 second but not longer than 100 hours. A heat treatment at a temperature lower than 120°C is not preferable because the resin cannot be fully crystallized, so that high-temperature dimensional stability or surface quality may be impaired in some cases. On the other hand, a heat treatment at a temperature exceeding 290°C may impair surface quality due to deformation of the coating layer. A heat treatment for a period of time shorter than 1 second is not preferable because the resin cannot be fully crystallized, so that high-temperature dimensional stability or surface quality may be impaired in some cases. On the other hand, a heat treatment too long is also not preferable because surface quality is impaired due to deformation of the coating layer. In the case where the coated metal body taken up once is heat-treated, it is preferable to control the heat-treating temperature to at least 190°C from the viewpoint of the elongation of the coating layer. In particular, high elongation at breakage can be achieved by using heat-treating conditions that the heat-treating temperature is preferably 200-270°C, more preferably 230-260°C, and the heat-treating time is preferably 1 second to 10 minutes, more preferably about 1-60 seconds.

The crystallinity of the resin forming the coating layer is preferably controlled to 30% or lower by the heat treatment. If the crystallinity exceeds 30%, there is a possibility that the coating layer formed may become brittle. The crystallinity of the resin forming the coating layer is preferably within a range of 15-30%. However, the elongation of the coating layer shows a tendency to vary even when the crystallinity of the resin is the same if the heat-treating temperature varies. A higher elongation is easy to attain even when the crystallinity of the resin is the same or higher as the heat-treating temperature becomes higher. On the other hand, when the crystallinity is increased by making the heat-treating time longer at a relatively low heat-treating temperature, the elongation shows a tendency to lower. Therefore, it is preferable to conduct the heat treatment at the heat-treating temperature of 200-270°C as described above in such heat-treating time as the crystallinity does not exceed 30%.

Metal member coated with PAS resin having an elongational viscosity of at least 10,000 Pa·s:

The second feature of the present invention resides in that a PAS resin having an elongational viscosity of at least 10,000 Pa·s as measured at 310°C and a shear rate of 400/sec is used, and the PAS resin is coated on a metal base, thereby forming a coating layer whose crystallization temperature upon heating as measured by means of a DSC is lower by at least 6°C than that of an unorientated noncrystalline sheet of the PAS resin.

In this case, as the PAS resin useful in the practice of the present invention, there may be used a completely linear resin obtained from only an alkali metal sulfide and a dihalo-aromatic compound. However, the resin is desirably a branched resin obtained by causing a small amount of a trihalo-aromatic compound, which is a trifunctional monomer, to coexist upon the reaction of the alkali metal sulfide with a dihalo-aromatic compound because its elongational viscosity is sufficiently high as at least 10,000 Pa·s. Such a branched resin can be obtained in accordance with the polymerization process described above.

The elongational viscosity of the PAS resin used in the present invention must be as high as at least 10,000 Pa·s. The viscosity is preferably 10,000-300,000 Pa·s, more preferably 10,000-200,000 Pa·s. Here, the elongational viscosity can be calculated out in accordance with the method of F.N. Cogswell [Polym. Eng. Sci. 12, p. 64 (1972)]. Its details will be described subsequently. If the elongational viscosity of the PAS resin is too low, the molecular weight or branching degree of the PAS resin becomes insufficient. Therefore, when such a PAS resin is melt-extruded on a metal base to continuously form a coating layer, difficulty may be encountered on the stable provision of a coated product in some cases. Besides, if the elongational viscosity of the PAS resin is too low, the elongation at break of the resulting coating layer becomes low, so that the flexing resistance and flexibility of the coating layer become unsatisfactory, and moreover the coating layer becomes easy to crack when the coated metal member obtained is exposed to a high temperature to crystallize the resin after the coating. If the elongational viscosity of the PAS resin is too high, there are possibilities that the processability of the resin may be deteriorated and that the flexing resistance and flexibility of the resulting coating layer may be lowered. In addition, the take-off speed of the metal base upon coating must be reduced, so that productivity is decreased. The melt viscosity of the PAS resin as measured at 310°C and a shear rate of 1200/sec is preferably at least 50 Pa·s.

In order to continuously conduct the coating of a metal base with the above PAS resin, the resin is melted at a temperature not lower than the melting point of this resin, preferably a temperature ranging from (the melting point + 5°C) to 370°C, more preferably a temperature ranging from (the melting point + 20°C) to 350°C by means of an extruder, and then applied to the metal base on the outside of a die while forming a parison. During the coating process, the metal body to be coated (i.e., a metal member to be coated) is taken off at a fixed rate by pinch rollers or the like, and an even coating layer is continuously formed on the metal base immediately after it has passed through the die. The coated metal body is then cooled in a cooling zone and generally taken up by a take-up machine or the like.

In the present invention, (1) it is necessary to make a crystallization temperature upon heating of the coating layer formed of the PAS resin as measured by means of a DSC lower by at least 6°C than that of an unorientated noncrystalline sheet of the PAS resin. In addition, it is desirable that (2) the strength at 10% strain of the coating layer formed of the PAS resin be preferably at least 0.93 times, more preferably at least 0.95 times the yield strength of the coating layer, that (3) the crystallinity of the coating layer formed of the PAS resin after subjected to a heat treatment at a heat-treating temperature of 120-290°C be within a range of 10-40%, that (4) the strength at 10% strain of the coating layer of the PAS resin after the heat treatment be at least 0.95 times the yield strength of the coating layer, and that (5) the elongation at break of the coating layer formed of the PAS resin after the heat treatment be at least 30%.

In the present invention, a difference ($X - Y = \Delta Tc_1$) between the crystallization temperature upon heating ($X$) of the coating layer formed of the PAS resin and the crystallization temperature upon heating ($Y$) of the unorientated noncrystalline sheet of the PAS resin must be -6°C or smaller, namely, $\Delta Tc_1 \leq$ -6°C. If this difference is greater than -6°C ($\Delta Tc_1 >$ -6°C), the elongation at break of the coating layer formed of the PAS resin becomes low, so that the flexing resistance and flexibility of the coating layer are deteriorated. A range of $\Delta Tc_1$ is generally -35°C $\leq \Delta Tc_1 \leq$ -6°C, preferably -25°C $\leq \Delta Tc_1 \leq$ -7°C.

The strength at 10% strain ($B$) of the coating layer formed of the PAS resin as determined by a tensile test is preferably at least 0.93 times ($B/A \geq 0.93$), more preferably at least 0.95 times ($B/A \geq 0.95$) the yield strength ($A$) of the coating layer. If this ratio is lower than 0.93 times ($B/A <$ 0.93), the elongation at break of the coating layer formed of the PAS resin becomes low, so that the flexing resistance and flexibility of the coating layer are deteriorated. The ratio ($B/A$) is more preferably $0.93 \leq B/A \leq 2$, still more preferably $0.95 \leq B/A \leq 1.8$.

The crystallinity of the coating layer formed of the PAS resin after subjected to a heat treatment at a heat-treating temperature of 120-290°C is preferably within a range of 10-40%. The coating layer according to the present invention has a sufficient elongation even when it is heat-treated until its crystallinity reaches, for example, at least 30%, because the PAS resin undergoes molecular chain orientation. Namely, the strength at 10% strain ($B$) of the coating layer formed of the PAS resin after the heat treatment is preferably at least 0.95 times the yield strength ($A$) of the coating layer, and the elongation at break of the coating layer formed of the PAS resin after the heat treatment is preferably at least 30%.

As a process for forming the coating layer of the PAS resin having such physical properties on a metal base, there is a process wherein an area drawdown ratio ($R1$) upon coating is selected according to the elongational viscosity ($\lambda_{400}$) of the PAS resin. In general, it is only necessary to set the area drawdown ratio at a higher value as the elongational viscosity of the PAS resin is lower, or set the area drawdown ratio at a lower value as the elongational viscosity of the PAS resin is higher to the contrary. Namely, the PAS resin of the coating layer becomes easier to orientate even when the area drawdown ratio is low as the molecular weight or branching degree of the PAS resin increases. The term "area drawdown ratio ($R1$)" as used herein means a value obtained by dividing an sectional area of a resin melt-extruded through a die of an extruder by a sectional area of the resulting coating layer. In the case of, for example, a coated wire, the area drawdown ratio is represented by the following equation:

$$\text{Area drawdown ratio } (R1) =$$

$$[(\text{Inner diameter of die})^2 - (\text{Outer diameter of mandrel})^2]/$$

$$[(\text{Outer diameter of coated wire})^2 - (\text{Outer diameter of wire})^2].$$

Since the strength at 10% strain ($B$) of the coating layer formed of the PAS resin is preferably at least 0.93 times the yield strength ($A$) of the coating layer in the present invention, it is desirable to select an area drawdown ratio ($R1$), by which $B/A \geq 0.93$ is achieved, in relation to the elongational viscosity ($\lambda_{400}$). The analysis of the experimental data of the following Examples and Comparative Examples has revealed that a transformation model of a logarithmic curve is well fit, and that when a PAS resin is applied to a metal base, it is only necessary to select the elongational viscosity ($\lambda_{400}$) of a PAS resin to be used and an area drawdown ratio ($R1$) so as to satisfy the following relationships (I) and (II):

$$B/A \geq 0.93 \tag{I}$$

$$\ln R1 \geq [B/A - \{0.38453 + 0.11599 \ln\lambda_{400}\}]/$$

$$\{0.05225 \ln\lambda_{400}\} \tag{II}$$

The meanings of the individual symbols in the relationships are as follows:

A:     Yield strength (MPa) of the coating layer formed of the PAS resin;
B:     Strength (MPa) at 10% strain of the coating layer formed of the PAS resin;

$\lambda_{400}$:     Elongational viscosity (Pa·s) of the PAS resin as measured at 310°C and a shear rate of 400/sec;

R1:     Area drawdown ratio (%) upon coating of the PAS resin.

In order to apply these relationships, for example, values of the elongational viscosity ($\lambda_{400}$) of the PAS resin and B/A are determined to calculate a value of the area drawdown ratio (R1) satisfying these values from the relationship (II). The relationship (I) is preferably substituted by B/A $\geq$ 0.95 [relationship (III)]. When the coating is conducted under conditions satisfying these relationships (I) and (II) to satisfy the requirement of $\Delta Tc_1 \leq$ -6°C, good results can be obtained.

In the present invention, in order to control the crystallinity and mechanical properties of the coating layer to obtain a desired coated metal body, a heating zone may be optionally provided between the die of the extruder through which the molten resin is extruded to form a parison, thereby coating the metal base, and the pinch rollers to heat-treat the coated metal body. The heat-treating temperature for the coated metal body is generally 120-290°C, preferably 130-270°C. The heat-treating time (namely, residence time in the heating zone) varies according to productivity, the thickness of the coating layer, take-off speed, and the crystallization rate and crystallization temperature of the resin and can hence not be specified unqualifiedly. However, it is generally not shorter than 0.1 seconds but not longer than 10 minutes.

In the present invention, the coated metal body taken up once may also be optionally heat-treated in order to control the crystallinity and mechanical properties of the coating layer to obtain a desired coated metal body. In this case, the heat-treating temperature for the coated metal body is within a range of generally 120-290°C, preferably 130-270°C. The heat-treating time varies according to productivity, the thickness of the coating layer, take-off speed, and the crystallization rate and crystallization temperature of the resin and can hence not be specified unqualifiedly. However, it is generally not shorter than 1 second but not longer than 100 hours. A heat treatment at a temperature lower than 120°C is not preferable because the resin cannot be fully crystallized, so that high-temperature dimensional stability or surface quality may be impaired in some cases. On the other hand, a heat treatment at a temperature exceeding 290°C may impair surface quality due to deformation of the coating layer. A heat treatment for a period of time shorter than 1 second is not preferable because the resin cannot be fully crystallized, so that high-temperature dimensional stability or surface quality may be impaired in some cases. On the other hand, a heat treatment too long is also not preferable because surface quality is impaired due to deformation of the coating layer.

The crystallinity of the resin forming the coating layer is preferably controlled to generally 30% or lower by the heat treatment if the orientation of the PAS resin forming the coating layer is low. However, when a PAS resin having an elongational viscosity of at least 10,000 Pa·s is used, and an area drawdown ratio is suitably selected to enhance orientation, a sufficient elongation can be retained even when the crystallinity is heightened beyond 30% by the heat treatment, so that there is no possibility that the coating layer may become brittle. The crystallinity of the resin forming the coating layer is preferably controlled within a range of 15-40%, more preferably 17-35%.

Other components:

In the resins and coated metal bodies according to the present invention, besides the PAS resin, other minor components miscible with the PAS resin may be contained within limits not impeding the objects of the present invention. Examples of other components include granular, powdery or scaly inorganic fillers such as silica, talc, mica, kaolin, calcium carbonate, magnesium phosphate and glass; fluororesins such as polytetrafluoroethylene, tetrafluoroethylene-hexafluoropropylene copolymers and ethylene-tetrafluoroethylene copolymers; fibrous inorganic fillers such as glass fibers, carbon fibers and mica ceramic fibers; impact modifiers such as silicone elastomers, acrylic elastomers, olefin elastomers, polyamide elastomers and fluoroelastomers; and besides, other thermoplastic resins, thermosetting resins, coupling agents, lubricants, parting agents, stabilizers and nucleating agents.

The PAS resins according to the present invention are excellent in adhesion to metal bases. In fields of, for example, coated wires and the like, in which the coating layer is required to have moderate strippability from the metal base from the viewpoint of working, a small amount of a parting agent may be contained in the resin. As examples of the parting agent, may be mentioned fatty acid esters such as pentaerythritol tristearate and distearyl pentaerythritol diphosphate. The parting agent is generally used in a proportion of 0.1-3 parts by weight per 100 parts by weight of the resin. As a stabilizer, any known stabilizer for poly(arylene sulfide) resins may be used. However, for example, barium hydroxide or the like is preferred for the purpose of stably melt-extruding a resin through a die of an extruder to conduct coating. The stabilizer is generally used in a proportion of 0.1-3 parts by weight per 100 parts by weight of the resin.

Metal base and application fields of coated metal member:

As illustrative metal bases, may be mentioned continuous metal bases, such as metallic conductors (metallic conductor wires) such as electric wires, metal rods, metal tubes and wires. The thickness of the coating layer formed of the PAS resin can be suitably determined according to application purpose and desired properties.

According to the present invention, there are provided coated metal members such as coated wires, on which a coating layer composed of the PAS resin excellent in heat resistance, Freon resistance, flame retardancy, chemical resistance, radiation resistance, low-temperature properties, electrical insulating properties, mechanical properties and the like has been formed. Specific examples of the coated metal members include conduit tubes and inner cables for control cables in automobiles or ships, windings for heat-resistant coils or motors, solenoid lead wires for automobiles, Freon-resistant wires for compressors and the like, windings for transformers, radiation-resistant equipment wirings for nuclear power plants, cables, magnet wires, metal rods, metal tubes, other heat-resistant wires, sheaths, and wires.

ADVANTAGES OF THE INVENTION

According to the present invention, there are provided poly(arylene sulfide) resins for coating metals, by which when a metal base is coated with such a resin, the resin can be stably continuously applied without any breaking of the resin, and the resulting coating layer undergoes no cracking even when subjected to a heat treatment after the coating.

According to the present invention, there are also provided metal members coated with the PAS resin excellent in heat resistance, Freon resistance, flame retardancy, chemical resistance, radiation resistance, low-temperature properties, electrical insulating properties, mechanical properties and the like. The coated metal members according to the present invention each have a stable continuous coating layer free from breaking of resin. The coating layer retains excellent tensile properties, flexibility, flexing resistance and the like even when subjected to a heat treatment after the coating.

EMBODIMENTS OF THE INVENTION

The present invention will hereinafter be described more specifically by the following Examples and Comparative Examples.

Example 1:

Synthesis Example (1) of polymer:

A titanium-lined polymerizer was charged with 373 kg of hydrous sodium sulfide (purity: 46.06%) and 800 kg of N-methylpyrrolidone (hereinafter abbreviated as "NMP"), and the temperature of the reaction system was gradually raised up to about 200°C in a nitrogen gas atmosphere, thereby distilling off 141 kg of water together with 54.4 moles of hydrogen sulfide. A mixed solution of 324.7 kg of p-dichlorobenzene (hereinafter abbreviated as "p-DCB"), 0.796 kg of 1,2,4-trichlorobenzene and 274 kg of NMP was then fed to conduct a polymerization reaction at 220°C for 5 hours. After 96.6 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 $\mu$m (100 mesh) to separate a granular polymer. The thus-separated granular polymer was washed each 3 times with methanol and water, dehydrated and then dried. The granular polymer thus obtained had a melt viscosity of 1,315 Pa·s as measured at 310°C and a shear rate of 200/sec, and an R value of 2.64.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 300-330°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire. Conditions for coating the conductor wire were as follows:

Cylinder temperature: 335°C
Extrusion rate: 8 g/min
Take-off speed: 18 m/min
Draw ratio: 9.5 times
Length of parison cone: 15 mm
Reduced pressure by evacuation between the conductor wire and a coating layer: -15 cmHg.

As the conductor wire, a hard drawn copper wire for electric wire 0.4 mm across (JIS C3101) was used. The coating die used was equipped with a mandrel having an outer diameter of 1.3 mm at its tip and had an inner diameter of 2.2 mm.

During the coating process, coating could be stably performed continuously for 6 hours without causing any breaking of resin, thereby obtaining a coated product having an outer diameter of 0.7 mm and an even surface. After cooling the coated product, it was introduced into a heating zone to heat-treat under conditions of 250°C and residence time of 3 seconds, thereby crystallizing the coating resin. Thereafter, the coated product was taken up on a roll. The thus-obtained coated product underwent neither cracking nor fracturing in its coating layer even when bent. The conductor wire was drawn out of the coated product to conduct a tensile test of the coating layer under the following conditions:

<Tensile test>

Testing machine:      TENSILON manufactured by Baldwin Co.
Sample length:        100 mm
Cross-head speed:     100 mm/min.

As a result, the coating layer was found to have a tensile strength at break of 136 MPa and an elongation at break of 150%.

Example 2:

The same pellet-like material and conductor wire as those used in Example 1 were used, and the coating conditions were changed so as to give a draw ratio of 50 times, thereby conducting coating. The conditions for coating the conductor wire were as follows:

Cylinder temperature: 340°C
Extrusion rate: 34 g/min
Take-off speed: 100 m/min
Draw ratio: 50 times
Length of parison cone: 40 mm
Reduced pressure by evacuation between the conductor wire and a coating layer: -15 cmHg
Outer diameter of a mandrel tip of the coating die: 2.8 mm
Inner diameter of the die: 4.9 mm.

As a result of the coating experiment, a coated product having an outer diameter of 0.7 mm was obtained. The thus-obtained coated product was subjected to the same heat treatment as in Example 1. The resultant coated product underwent neither cracking nor fracturing in its coating layer even when bent. As a result of the same tensile test as in Example 1, the coating layer was found to have a tensile strength at break of 170 MPa and an elongation at break of 135%.

Example 3:

Synthesis Example (2) of Polymer:

A titanium-lined polymerizer was charged with 370 kg of hydrous sodium sulfide (purity: 46.21%) and 800 kg of NMP, and the temperature of the reaction system was gradually raised up to about 200°C in a nitrogen gas atmosphere, thereby distilling off 140.5 kg of water together with 53.4 moles of hydrogen sulfide. A mixed solution of 324 kg of p-DCB, 0.790 kg of 1,2,4-trichlorobenzene and 270 kg of NMP was then fed to conduct a polymerization reaction at 220°C for 5 hours. After 96.7 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 µm (100 mesh) to separate a granular polymer. The thus-separated granular polymer was washed each 3 times with methanol and water, dehydrated and then dried. The granular polymer thus obtained had a melt viscosity of 749 Pa·s as measured at 310°C and a shear rate of 200/sec, and an R value of 2.43.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 300-320°C to obtain a pellet-like material. The thus-obtained pellet-like material was fed to a twin-screw extruder (Laboplastomill, manufactured by Toyo Seiki Seisaku-Sho, Ltd.) equipped with a wire coating die to conduct coating under the same conditions as in Example 1 except that the cylinder temperature and reduced pressure by evacuation between the conductor wire and a coating layer were changed to 320°C and -13 cmHg, respectively.

During the coating process, - coating could be stably performed continuously for 6 hours without causing any breaking of resin, thereby obtaining a coated product having an outer diameter of 0.7 mm and an even surface. The thus-obtained coated product was subjected to the same heat treatment as in Example 1. The resultant coated product underwent neither cracking nor fracturing in its coating layer even when bent. As a result of the same tensile test as in Example 1, the coating layer was found to have a tensile strength at break of 125 MPa and an elongation at break of 110%.

Example 4:

Synthesis Example (3) of polymer:

A titanium-lined polymerizer was charged with 371 kg of hydrous sodium sulfide (purity: 46.10%) and 800 kg of NMP, and the temperature of the reaction system was gradually raised up to about 200°C in a nitrogen gas atmosphere, thereby distilling off 140.0 kg of water together with 54.0 moles of hydrogen sulfide. A mixed solution of 325 kg of p-DCB, 0.885 kg of 1,2,4-trichlorobenzene and 270 kg of NMP was then fed to conduct a polymerization reaction at 220°C for 5 hours. After 95.8 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The granular polymer thus obtained had a melt viscosity of 726 Pa.s as measured at 310°C and a shear rate of 200/sec, and an R value of 2.72.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 300-320°C to obtain a pellet-like material. The thus-obtained pellet-like material was fed to a twin-screw extruder (Laboplastomill, manufactured by Toyo Seiki Seisaku-Sho, Ltd.) equipped with a wire coating die to conduct coating under the same conditions as in Example 3 except that the reduced pressure by evacuation between the conductor wire and a coating film was changed to -10 cmHg, respectively.

During the coating process, coating could be stably performed continuously for 6 hours without causing any breaking of resin, thereby obtaining a coated product having an outer diameter of 0.7 mm and an even surface. The thus-obtained coated product was subjected to the same heat treatment as in Example 1. The resultant coated product underwent neither cracking nor fracturing in its coating layer even when bent. As a result of the same tensile test as in Example 1, the coating layer was found to have a tensile strength at break of 110 MPa and an elongation at break of 105%.

Example 5:

Synthesis Example (4) of polymer:

A titanium-lined polymerizer was charged with 373 kg of hydrous sodium sulfide (purity: 46.10%) and 810 kg of NMP, and the temperature of the reaction system was gradually raised up to about 200°C in a nitrogen gas atmosphere, thereby distilling off 140.0 kg of water together with 53.8 moles of hydrogen sulfide. A mixed solution of 321.0 kg of p-DCB, 0.795 kg of 1,2,4-trichlorobenzene and 266 kg of NMP was then fed to conduct a polymerization reaction at 220°C for 5 hours. After 95.8 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The granular polymer thus obtained had a melt viscosity of 1,600 Pa·s as measured at 310°C and a shear rate of 200/sec, and an R value of 2.88.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 300-330°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 345°C
Extrusion rate: 8 g/min
Take-off speed: 18 m/min
Draw ratio: 9.5 times
Length of parison cone: 23 mm
Reduced pressure by evacuation between the conductor wire and a coating layer: -15 cmHg.

The conductor wire and coating die used were the same as those used in Example 1.

During the coating process, coating could be stably performed continuously for 6 hours without causing any breaking of resin, thereby obtaining a coated product having an outer diameter of 0.7 mm and an even surface. The thus-obtained coated product was subjected to the same heat treatment as in Example 1. The resultant coated product underwent neither cracking nor fracturing-in its coating layer even when bent. As a result of the same tensile test as in Example 1, the coating layer was found to have a tensile strength at break of 145 MPa and an elongation at break of 170%.

Example 6:

Synthesis Example (5) of polymer:

A titanium-lined polymerizer was charged with 372 kg of hydrous sodium sulfide (purity: 46.21%) and 820 kg of NMP, and the temperature of the reaction system was gradually raised up to about 200°C in a nitrogen gas atmosphere, thereby distilling off 140.5 kg of water together with 53.9 moles of hydrogen sulfide. A mixed solution of 326 kg of p-DCB, 0.856 kg of 1,2,4-trichlorobenzene and 255 kg of NMP was then fed to conduct a polymerization reaction at 220°C for 5 hours. After 96.2 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The granular polymer thus obtained had a melt viscosity of 1,100 Pa·s as measured at 310°C and a shear rate of 200/sec, and an R value of 2.85.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 300-320°C to obtain a pellet-like material.

The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 330°C
Extrusion rate: 8 g/min
Take-off speed: 18 m/min
Draw ratio: 9.5 times
Length of parison cone: 15 mm
Reduced pressure by evacuation between the conductor wire and a coating layer: -18 cmHg.

The conductor wire and coating die used were the same as those used in Example 1.

During the coating process, coating could be stably performed continuously for 6 hours without causing any breaking of resin, thereby obtaining a coated product having an outer diameter of 0.7 mm and an even surface. The thus-obtained coated product was subjected to the same heat treatment as in Example 1. The resultant coated product underwent neither cracking nor fracturing in its coating layer even when bent. As a result of the same tensile test as in Example 1, the coating layer was found to have a tensile strength at break of 140 MPa and an elongation at break of 140%.

Example 7:

The same pellet-like material as that used in Example 6 was used to conduct coating. The coating was conducted under the following conditions:

Cylinder temperature: 330°C
Extrusion rate: 10 g/min
Take-off speed: 20 m/min
Draw ratio: 6.6 times
Length of parison cone: 15 mm
Reduced pressure by evacuation between the conductor wire and a coating layer: -15 cmHg.

The conductor wire and coating die used were the same as those used in Example 1.

During the coating process, coating could be stably performed continuously for 6 hours without causing any breaking of resin, thereby obtaining a coated product having an outer diameter of 0.8 mm and an even surface. The thus-obtained coated product was subjected to a heat treatment under conditions of 250°C and residence time of 5 seconds. The resultant coated product underwent neither cracking nor fracturing in its coating layer even when bent. As a result of the same tensile test as in Example 1, the coating layer was found to have a tensile strength at break of 130 MPa and an elongation at break of 145%.

Example 8:

Synthesis Example (6) of polymer:

A titanium-lined polymerizer was charged with 370 kg of hydrous sodium sulfide (purity: 46.40%) and 810 kg of NMP, and the temperature of the reaction system was gradually raised up to about 200°C in a nitrogen gas atmosphere, thereby distilling off 140.0 kg of water together with 54.0 moles of hydrogen sulfide. A mixed solution of 320 kg of p-DCB, 0.465 kg of 1,2,4-trichlorobenzene and 263 kg of NMP was then fed to conduct a polymerization reaction at 220°C for 5 hours. After 96.5 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 $\mu$m (100 mesh) to separate a granular polymer. The thus-separated granular polymer was washed each 3 times with methanol and water, dehydrated and then dried. The granular polymer thus obtained had a melt viscosity of 340 Pa·s as measured at 310°C and a shear rate of 200/sec, and an R value of 2.18.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 290-315°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 315°C
Extrusion rate: 8 g/min
Take-off speed: 18 m/min
Draw ratio: 9.5 times
Length of parison cone: 10 mm
Reduced pressure by evacuation between the conductor wire and a coating layer: -10 cmHg.

The conductor wire and coating die used were the same as those used in Example 1.

During the coating process, coating could be stably performed continuously for 6 hours without causing any breaking of resin, thereby obtaining a coated product having an outer diameter of 0.7 mm and an even surface. The thus-obtained coated product was subjected to the same heat treatment as in Example 1. The resultant coated product underwent neither cracking nor fracturing in its coating layer even when bent. As a result of the same tensile test as in Example 1, the coating layer was found to have a tensile strength at break of 100 MPa and an elongation at break of 100%.

Example 9:

Synthesis Example (7) of polymer:

A titanium-lined polymerizer was charged with 372 kg of hydrous sodium sulfide (purity: 46.21%) and 824 kg of NMP, and the temperature of the reaction system was gradually raised up to about 200°C in a nitrogen gas atmosphere, thereby distilling off 142.0 kg of water together with 56.6 moles of hydrogen sulfide. A mixed solution of 322.2 kg of p-DCB, 0.796 kg of 1,2,4-trichlorobenzene and 249 kg of NMP was then fed to conduct a polymerization reaction at 220°C for 5 hours. After 96.8 kg of water were then introduced under pressure into the reaction system to conduct the polymerization reaction at 255°C for 5 hours, the temperature of the reaction system was lowered down to 245°C to continue the polymerization reaction for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The granular polymer thus obtained had a melt viscosity of 2,125 Pa·s as measured at 310°C and a shear rate of 200/sec, and an R value of 2.80.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 310-350°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 350°C
Extrusion rate: 8 g/min
Take-off speed: 15 m/min
Draw ratio: 6.6 times
Length of parison cone: 15 mm
Reduced pressure by evacuation between the conductor wire and a coating layer: -15 cmHg.

The conductor wire and coating die used were the same as those used in Example 1.
During the coating process, coating could be stably performed continuously for 6 hours without causing any breaking of resin, thereby obtaining a coated product having an outer diameter of 0.8 mm and an even surface. The thus-obtained coated product was subjected to the same heat treatment as in Example 1. The resultant coated product underwent neither cracking nor fracturing in its coating layer even when bent. As a result -of the same tensile test as in Example 1, the coating layer was found to have a tensile strength at break of 120 MPa and an elongation at break of 65%.
The pelletizing conditions, wire coating conditions, heat-treating conditions and evaluation results of the coated products in the above Examples are given collectively in Table 1.

Table 1

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Pelletizing | Melt vis. $\eta_{200}$ (Pa·s) | 1315 | 1315 | 749 | 726 | 1600 | 1100 | 1100 | 340 | 2125 |
| | Melt vis. $\eta_{1200}$ (Pa·s) | 498 | 498 | 308 | 267 | 556 | 386 | 386 | 156 | 759 |
| | R | 2.64 | 2.64 | 2.43 | 2.72 | 2.88 | 2.85 | 2.85 | 2.18 | 2.80 |
| | Cylinder temp. (°C) | 300-330 | 300-330 | 300-320 | 300-320 | 300-330 | 300-320 | 300-320 | 290-315 | 310-350 |
| Wire coating | Cylinder temp. (°C) | 335 | 340 | 320 | 320 | 345 | 330 | 330 | 315 | 350 |
| | Extrusion rate (g/min) | 8 | 34 | 8 | 8 | 8 | 8 | 10 | 8 | 8 |
| | Take-off speed (m/min) | 18 | 100 | 18 | 18 | 18 | 18 | 20 | 18 | 15 |
| | Draw ratio (times) | 9.5 | 50 | 9.5 | 9.5 | 9.5 | 9.5 | 6.6 | 9.5 | 6.6 |
| | Parison cone length (mm) | 15 | 40 | 15 | 15 | 23 | 15 | 15 | 10 | 15 |
| | Reduced pressure by evacuation (cmHg) | -15 | -15 | -13 | -10 | -15 | -18 | -15 | -10 | -15 |
| | Wire diameter (mm) | 0.4 | 0.4 | 0.4 | 0.4 | 0.4 | 0.4 | 0.4 | 0.4 | 0.4 |
| | Coating die    Outer diam. of mandrel tip (mm) | 1.3 | 2.8 | 1.3 | 1.3 | 1.3 | 1.3 | 1.3 | 1.3 | 1.3 |
| | Inner diam. of die (mm) | 2.2 | 4.9 | 2.2 | 2.2 | 2.2 | 2.2 | 2.2 | 2.2 | 2.2 |
| | Outer diameter of Coated product (mm) | 0.7 | 0.7 | 0.7 | 0.7 | 0.7 | 0.7 | 0.8 | 0.7 | 0.8 |
| | Coating ability | Good | Good | Good | Good | Good | Good | Good | Good | Good |
| Heat-treating conditions | Temperature (°C) | 250 | 250 | 250 | 250 | 250 | 250 | 250 | 250 | 250 |
| | Time (sec) | 3 | 3 | 3 | 3 | 3 | 3 | 3 | 3 | 3 |
| Evaluation of coated product | Crack and fracture by bent | None | None | None | None | None | None | None | None | None |
| | Tensile strength (MPa) | 136 | 170 | 125 | 110 | 145 | 140 | 130 | 100 | 120 |
| | Elongation at break (%) | 150 | 135 | 110 | 105 | 170 | 140 | 145 | 100 | 65 |

Comparative Example 1:

Synthesis Example (8) of polymer:

A titanium-lined polymerizer was charged with 390 kg of hydrous sodium sulfide (purity: 46.40%) and 800 kg of NMP, and the temperature of the reaction system was gradually raised up to about 200°C in a nitrogen gas atmosphere, thereby distilling off 148.0 kg of water together with 57.8 moles of hydrogen sulfide. A mixed solution of 354.6 kg of p-DCB, 8.210 kg of 1,2,4-trichlorobenzene and 218 kg of NMP was then fed to conduct a polymerization reaction at 220°C for 4 hours. Then, 85.6 kg of water were then introduced under pressure into the reaction system, and the temperature of the reaction system was raised up to 255°C at a rate of 0.6°C/min to conduct the polymerization reaction at 255°C for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed 3 times with acetone, 4 times with water, once with a 0.6% aqueous solution of ammonium chloride , once with water and once with a 0.06% aqueous solution of ammonium chloride, dehydrated and then dried. The polymer thus obtained had a melt viscosity of 3,100 Pa·s as measured at 310°C and a shear rate of 200/sec, and an R value of 4.08.

Metal coating experiment:

The polymer obtained above was fed to a twin-screw kneader extruder (BT-30 Model, manufactured by Plastic Engineering Laboratory) having a cylinder bore of 30 mm to pelletize it. However, the resin was not melted, resulting in a failure to obtain a pellet-like material.

Comparative Example 2:

Synthesis Example (9) of polymer:

A titanium-lined polymerizer was charged with 390 kg of hydrous sodium sulfide (purity: 46.40%) and 800 kg of NMP, and the temperature of the reaction system was gradually raised up to about 200°C in a nitrogen gas atmosphere, thereby distilling off 147.0 kg of water together with 57.2 moles of hydrogen sulfide. A mixed solution of 337.5 kg of p-DCB and 219 kg of NMP was then fed to conduct a polymerization reaction at 220°C for 4.5 hours. After 80.8 kg of water were then introduced under pressure into the reaction system to conduct the polymerization reaction at 255°C for 2 hours, the temperature of the reaction system was lowered down to 245°C to continue the polymerization reaction for 11 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The polymer thus obtained had a melt viscosity of 916 Pa·s as measured at 310°C and a shear rate of 200/sec, and an R value of 1.90.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 290-320°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 320°C
Extrusion rate: 8 g/min
Take-off speed: 18 m/min
Draw ratio: 9.5 times
Length of parison cone: 2 mm
Reduced pressure by evacuation between the conductor wire and a coating layer: -0.5 cmHg.

The conductor wire and coating die used were the same as those used in Example 1.

During the coating process, breaking of resin occurred at a frequency of once/3 hours. Since the elasticity of the resin was poor, it was difficult to reduce the pressure between the conductor wire and the coating layer, so that the length of the parison cone could not be optimaized. The resultant coated product had an outer diameter of 0.7 mm and an even surface. The coated product was subjected to the same heat treatment as in Example 1 and then to the same tensile test as in Example 1. As a result, the coating layer was found to have a tensile strength at break of 67 MPa and an elongation at break of 4%. This coated product underwent cracking in its coating layer when bent.

Comparative Example 3:

The same pellet-like material and conductor wire as those used in Comparative Example 2 were used, and the coating conditions were changed to conduct coating. The coating conditions were as follows:

Cylinder temperature: 330°C
Extrusion rate: 18 g/min
Take-off speed: 50 m/min
Draw ratio: 50 times
Length of parison cone: 2 mm
Reduced pressure by evacuation between the conductor wire and a coating layer: -0.55 cmHg
Outer diameter of a mandrel tip of the coating die: 2.8 mm
Inner diameter of the die: 4.9 mm.

During the coating process, breaking of resin frequently occurred, so that it was difficult to stably conduct the coating.

Comparative Example 4:

Synthesis Example (10) of polymer:

A titanium-lined polymerizer was charged with 420 kg of hydrous sodium sulfide (purity: 46.21%) and 720 kg of NMP, and the temperature of the reaction system was gradually raised up to about 200°C in a nitrogen gas atmosphere, thereby distilling off 160.0 kg of water together with 61.8 moles of hydrogen sulfide. A mixed solution of 363.6 kg of p-DCB and 250 kg of NMP was then fed to conduct a polymerization reaction at 220°C for 4.5 hours. Then, 56.5 kg of water were then introduced under pressure into the reaction system to conduct the polymerization reaction at 255°C for 5 hours. After completion of the polymerization reaction, the reaction system was cooled, and the liquid reaction mixture was then sifted through a screen having an opening of 150 $\mu$m (100 mesh) to separate a granular polymer. The thus-separated granular polymer was washed 3 times with methanol, 3 times with water, once with a 3% aqueous solution of ammonium chloride and twice with water. After the thus-washed polymer was added with water into a slurry again, hydrochloric acid was added to the slurry to adjust the pH of the slurry to about 5. The thus-treated slurry was dehydrated and dried. The polymer thus obtained had a melt viscosity of 192 Pa·s as measured at 310°C and a shear rate of 200/sec, and an R value of 1.37.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 290-305°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 310°C
Extrusion rate: 8 g/min
Take-off speed: 18 m/min
Draw ratio: 9.5 times
Length of parison cone: 2 mm
Reduced pressure by evacuation between the conductor wire and a coating layer: -0.4 cmHg.

The conductor wire and coating die used were the same as those used in Example 1.

During the coating process, breaking of resin occurred at a frequency of twice/hour. Since the elasticity of the resin was poor, it was difficult to reduce the pressure between the conductor wire and the coating layer, so that the length of the parison cone could not be optimized. The resultant coated product had an outer diameter of 0.7 mm and an even surface. The coated product was subjected to the same heat treatment as in Example 1 and then to the same tensile test as in Example 1. As a result, the coating layer was found to have a tensile strength at break of 58 MPa and an elongation at break of 3%. This coated product underwent cracking in its coating layer when bent.

Comparative Example 5:

Synthesis Example (11) of polymer:

A titanium-lined polymerizer was charged with 372 kg of hydrous sodium sulfide (purity: 46.40%) and 805 kg of NMP, and the temperature of the reaction system was gradually raised up to about 200°C in a nitrogen gas atmosphere, thereby distilling off 140.3 kg of water together with 53.9 moles of hydrogen sulfide. A mixed solution of 330 kg of p-DCB, 0.989 kg of 1,2,4-trichlorobenzene and 274 kg of NMP was then fed to conduct a polymerization reaction at 220°C for 5 hours. After 97.3 kg of water were then introduced under pressure into the reaction system to conduct the polymerization reaction at 255°C for 1 hour, the temperature of the reaction system was lowered down to 240°C to continue the polymerization reaction for 5 hours. After completion of the polymerization reaction, the reaction system was cooled, and the liquid reaction mixture was then sifted through a screen having an opening of 150 μm (100 mesh) to separate a granular polymer. The thus-separated granular polymer was washed each 3 times with methanol and water, dehydrated and then dried. The granular polymer thus obtained had a melt viscosity of 600 Pa·s as measured at 310°C and a shear rate of 200/sec, and an R value of 2.98.

Metal coating experiment:

The polymer obtained above was fed to a twin-screw kneader extruder (BT-30 Model, manufactured by Plastic Engineering Laboratory) having a cylinder bore of 30 mm and kneaded at a cylinder temperature of 290-310°C to obtain a pellet-like material. The thus-obtained pellet-like material was fed to a twin-screw extruder (Laboplastomill, manufactured by Toyo Seiki Seisaku-Sho, Ltd.) equipped with a wire coating die to coat a conductor wire under the following conditions:

Cylinder temperature: 315°C
Extrusion rate: 8 g/min
Take-off speed: 18 m/min
Draw ratio: 9.5 times
Length of parison cone: 5 mm
Reduced pressure by evacuation between the conductor wire and a coating layer: -0.5 cmHg.

The conductor wire and coating die used were the same as those used in Example 1.
During the coating process, breaking of resin occurred at a frequency of 4 times/hour, so that it was difficult to continuously and stably conduct the coating. The resultant coated product had an outer diameter of 0.7 mm and an even surface. The coated product was subjected to the same heat treatment as in Example 1 and then to the same tensile test as in Example 1. As a result, the coating layer was found to have a tensile strength at break of 52 MPa and an elongation at break of 3%. This coated product underwent cracking in its coating layer when bent.
The pelletizing conditions, wire coating conditions, heat-treating conditions and evaluation results of the coated products in the above Comparative Examples are given collectively in Table 2.

Table 2

| | | Comp. Ex. 1 | Comp. Ex. 2 | Comp. Ex. 3 | Comp. Ex. 4 | Comp. Ex. 5 |
|---|---|---|---|---|---|---|
| **Pelletizing** | Melt vis. $\eta_{200}$ (Pa·s) | 3100 | 916 | 916 | 192 | 600 |
| | Melt vis. $\eta_{1200}$ (Pa·s) | 759 | 482 | 482 | 140 | 201 |
| | R | 4.08 | 1.90 | 1.90 | 1.37 | 2.98 |
| | Cylinder temp. (°C) | – | 290-320 | 290-320 | 290-305 | 290-310 |
| **Wire coating** | Cylinder temp. (°C) | Failure to pelletize | 320 | 330 | 310 | 315 |
| | Extrusion rate (g/min) | | 8 | 18 | 8 | 8 |
| | Take-off speed (m/min) | | 18 | 50 | 18 | 18 |
| | Draw ratio (times) | | 9.5 | 50 | 9.5 | 9.5 |
| | Parison cone length (mm) | | 2 | 2 | 2 | 5 |
| | Reduced pressure by evacuation (cmHg) | | -0.5 | -0.55 | -0.4 | -0.5 |
| | Wire diameter (mm) | | 0.4 | 0.4 | 0.4 | 0.4 |
| | Coating die — Outer diam. of mandrel tip (mm) | | 1.3 | 2.8 | 1.3 | 1.3 |
| | Coating die — Inner diam. of die (mm) | | 2.2 | 4.9 | 2.2 | 2.2 |
| | Outer diameter of Coated product (mm) | | 0.7 | 0.7 | 0.7 | 0.7 |
| | Coating ability | | Poor | Poor | Poor | Poor |
| **Heat-treating conditions** | Temperature (°C) | – | 250 | – | 250 | 250 |
| | Time (sec) | – | 3 | – | 3 | 3 |
| **Evaluation of coated product** | Crack and fracture by bent | – | Occurred | – | Occurred | Occurred |
| | Tensile strength (MPa) | – | 67 | – | 58 | 52 |
| | Elongation at break (%) | – | 4 | – | 3 | 3 |

EP 0 765 895 A2

Example 10:

A polymer was synthesized in the same manner as in Synthesis Example (1) of polymer in Example 1. The polymer was then used to conduct a metal coating experiment in the same manner as in Example 1, thereby obtaining a coated product (a resin coated conductor wire). The thus-obtained coated product was introduced into a heating zone to heat-treat it under its corresponding conditions of heat-treating temperature and heat-treating time (residence time) shown in individual run numbers of Table 3, thereby crystallizing the coating resin. The thus-treated coated product was then taken up on a roll. The resultant coated product was subjected to the same tensile test as in Example 1. The crystallinity of the coating resin was also determined in accordance with the following measuring method. The results are shown in Table 3.

<Crystallinity>

The density of a coating resin sample was measured by the density-gradient tube method to calculate a crystallinity from the measured density according to its volume fraction on the basis of a crystalline density of 1.43 $g/cm^3$ and a noncrystalline density of 1.3195 $g/cm^3$.

Table 3

| Run No. | Heat-treating temp. (°C) | Residence time (sec) | Tensile strength (MPa) | Elongation at break (%) | Crystallinity (%) |
|---|---|---|---|---|---|
| 1 | 250 | 3 | 136 | 150 | 18.3 |
| 2 | 150 | 60 | 140 | 86 | 20.1 |
| 3 | 150 | 3600 | 120 | 50 | 23.1 |
| 4 | 180 | 60 | 140 | 86 | 23.6 |
| 5 | 180 | 3600 | 116 | 45 | 26.8 |
| 6 | 210 | 6 | 138 | 80 | 24.4 |
| 7 | 210 | 60 | 130 | 70 | 26.0 |
| 8 | 210 | 600 | 130 | 65 | 27.4 |
| 9 | 220 | 60 | 128 | 70 | 25.0 |
| 10 | 230 | 60 | 132 | 85 | 25.3 |
| 11 | 240 | 6 | 145 | 176 | 25.4 |
| 12 | 240 | 60 | 135 | 120 | 26.7 |
| 13 | 240 | 600 | 130 | 92 | 28.8 |
| 14 | 250 | 60 | 133 | 98 | 26.4 |

The results shown in Table 3 indicate that when the heat-treating temperature varies, the elongation at break varies even if the crystallinity is substantially the same. As seen in Run Nos. 1 and 11-14, a higher elongation at break is easy to attain as the heat-treating temperature becomes higher.

Example 11:

A polymer was synthesized in the same manner as in Synthesis Example (1) of polymer in Example 1. Then, 100 parts by weight of the polymer were mixed with 1 part by weight of pentaerythritol tristearate (Unistar H476, product of Nippon Oil & Fats Co., Ltd.) for 3 minutes in a tumbler mixer to obtain a resin composition. A metal coating experiment was performed in the same manner as in Example 1 except that this resin composition was used in place of the polymer used in Example 1, thereby obtaining a coated product (a resin coated conductor wire). After cooling the thus-obtained coated product, it was introduced into a heating zone to heat-treat it under the same conditions as in Example 1, thereby crystallizing the coating resin. The thus-treated coated product was then taken up on a roll. The resultant coated product was subjected to the same tensile test as in Example 1. As a result, the coating layer was found to have a tensile strength at break of 134 MPa and an elongation at break of 180%. This coated product had good strippability.

Example 12:

A polymer was synthesized in the same manner as in Synthesis Example (1) of polymer in Example 1. Then, 100 parts by weight of the polymer were mixed with 0.5 parts by weight of barium hydroxide for 3 minutes in a tumbler mixer to obtain a resin composition. A metal coating experiment was performed in the same manner as in Example 1 except that this resin composition was used in place of the polymer used in Example 1, thereby obtaining a coated product (a resin coated conductor wire). After cooling the thus-obtained coated product, it was introduced into a heating zone to heat-treat it under the same conditions as in Example 1, thereby crystallizing the coating resin. The thus-treated coated product was then taken up on a roll. The resultant coated product was subjected to the same tensile test as in Example 1. As a result, the coating layer was found to have a tensile strength at break of 125 MPa and an elongation at break of 120%. In this metal coating experiment, coating could be stably conducted continuously for 10 hours.

Example 13:

A polymer was synthesized in the same manner as in Synthesis Example (1) of polymer in Example 1. Then, 100 parts by weight of the polymer were mixed with 0.5 parts by weight of barium hydroxide and 0.5 parts by weight of distearyl pentaerythritol diphosphate (product of Specially Chemicals Co.) for 3 minutes in a tumbler mixer to obtain a resin composition. A metal coating experiment was performed in the same manner as in Example 1 except that this resin composition was used in place of the polymer used in Example 1, thereby obtaining a coated product (a resin coated conductor wire). After cooling the thus-obtained coated product, it was introduced into a heating zone to heat-treat it under the same conditions as in Example 1, thereby crystallizing the coating resin. The thus-treated coated product was then taken up on a roll. The resultant coated product was subjected to the same tensile test as in Example 1. As a result, the coating layer was found to have a tensile strength at break of 123 MPa and an elongation at break of 100%. This coated product had good strippability.

Example 14:

Synthesis Example (12) of polymer (Polymer P12):

A titanium-lined polymerizer was charged with 373 kg of hydrous sodium sulfide (purity: 46.10%) and 800 kg of NMP, and the temperature of the reaction system was gradually raised up to about 200°C in a nitrogen gas atmosphere, thereby distilling off 142 kg of water together with 54.4 moles of hydrogen sulfide. After a mixed solution of 320.6 kg of p-DCB, 0.796 kg of 1,2,4-trichlorobenzene and 274 kg of NMP was then fed to conduct a polymerization reaction at 220°C for 1 hour, the temperature of the reaction system was raised up to 230°C to conduct the polymerization reaction for 3 hours. After 76.5 kg of water were then introduced under pressure into the reaction system to conduct the polymerization reaction at 255°C for 1 hour, the temperature of the reaction system was lowered down to 240°C to continue the polymerization reaction for 3 hours. After cooling the reaction system, the liquid reaction mixture was sifted through a screen having an opening of 150 $\mu$m (100 mesh) to separate a granular polymer. The thus-separated granular polymer was washed each 4 times with acetone and water, dehydrated and then dried, thereby obtaining a polymer.

Pelletizing:

Polymer P12 was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the polymer at 310°C and a shear rate of 400/sec was measured under the following measuring conditions and was found to be 33,000 Pa·s. The polymer also had a melt viscosity of 360 Pa·s as measured at 310°C and a shear rate of 1200/sec.

<Elongational viscosity>

| | |
|---|---|
| Testing machine: | Capirograph manufactured by Toyo Seiki Seisaku-Sho, Ltd. |
| Measuring temperature: | 310°C |
| Capillary: | (i) diameter: 1 mm, length: 200 mm, inlet angle: 90 degrees; (ii) diameter: 0.3 mm, length: 0.2 mm, inlet angle: 180 degrees |
| Calculation of elongational viscosity: | Calculated by assuming the model of F.N. Cogswell. |

<u>Metal coating experiment:</u>

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 330°C
Extrusion rate: 7.6 g/min
Take-off speed: 33 m/min
Area drawdown ratio (R1): 72
Length of parison: 40 mm
Reduced pressure by evacuation between the conductor wire and a coating layer: -1 cmHg.

As the conductor wire, an annealed copper wire for electric wire 0.4 mm across (JIS C3101) was used. The coating die used was equipped with a mandrel having an outer diameter of 2.8 mm at its tip and had an inner diameter of 4.9 mm. The resultant coated product had an outer diameter of 0.62 mm and an even surface.

The conductor wire was drawn out of the coated product to conduct a tensile test of the coating layer under the following conditions. As a result, the coating layer was found to have a yield strength (A) of 55 MPa, a strength at 10% strain (B) of 56 MPa (B/A = 1.02), a maximum strength of 67 MPa and an elongation at break of 250%. The conductor wire was drawn out of the coated product to determine a difference between the crystallization temperatures upon heating of the coating layer and an unorientated pressed sheet (an unorientated noncrystalline sheet) of the polymer under the following conditions. As a result, the crystallization temperature upon heating of the coating layer was found to be lower than that of the unorientated pressed sheet by 11°C ($\Delta Tc_1$ = -11°C).

<Tensile test>

Testing machine: Autograph AG-2000E manufactured by Shimadzu Corporation
Measuring temperature: 23°C
Distance between gage marks: 50 mm
Cross-head speed: 50 mm/min.

The strength was calculated out by dividing a load by a sectional area of a sample before the test.

<Crystallization temperature upon heating ($Tc_1$)>

Testing machine: DSC7 manufactured by Perkin Elmer Co.
Temperature-time profile: After holding for 3 minutes at 30°C, the temperature was raised up to 200°C at a heating rate of 20°C/min.
Sample weight: 5-6 mg.

After the coated product was heat-treated under conditions shown in Table 4, the conductor wire was drawn out of the coated product to conduct another tensile test of the coating layer. The results are shown in Table 4.

Table 4

| Heat-treating conditions | Yield streng. (MPa) | Streng. at 10% strain (MPa) | Max. streng. (MPa) | Elong. at break (%) | Crystallinity (%) |
|---|---|---|---|---|---|
| 150°Cx24h | 90 | 93 | 95 | 130 | 23.8 |
| 150°Cx48h | 90 | 94 | 96 | 124 | 24.5 |
| 150°Cx96h | 91 | 94 | 98 | 120 | 24.6 |
| 150°Cx500h | 91 | 94 | 98 | 116 | 24.7 |
| 140°Cx10h+150°Cx96h | 91 | 95 | 97 | 130 | 24.3 |
| 140°Cx10h+180°Cx96h | 91 | 95 | 100 | 110 | 28.9 |

After the coated product was subjected to a heat aging test under conditions of 180°C and 96 hours in an air-circulating oven, the conductor wire was drawn out of the coated product to conduct a further tensile test of the coating layer. As a result, the coating layer was found to have a yield strength (A) of 91 MPa, a strength at 10% strain (B) of 94 MPa (B/A = 1.03), a maximum strength of 98 MPa and an elongation at break of 80%. The crystallinity of the coating resin after the heat aging test was 34%.

Comparative Example 6:

The same pellets of Polymer P12 and extruder as those used in Example 14, and a conductor wire were used to coat the conductor wire. Coating conditions were as follows:

Cylinder temperature: 330°C
Extrusion rate: 7.6 g/min
Take-off speed: 10 m/min
Area drawdown ratio (R1): 22
Length of parison: 25 mm
Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 2.8 mm at its tip and had an inner diameter of 4.9 mm. The resultant coated product had an outer diameter of 0.95 mm and an even surface.

The conductor wire was drawn out of the coated product to conduct a tensile test of the coating layer. As a result, the coating layer was found to have a yield strength (A) of 55 MPa, a strength at 10% strain (B) of 51 MPa (B/A = 0.93), a maximum strength of 72 MPa and an elongation at break of 310%.

The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 5°C ($\Delta Tc_1$ = -5°C).

After the coated product was subjected to a heat aging test under conditions of 180°C and 96 hours in an air-circulating oven, another tensile test of the coating layer was conducted. As a result, the coating layer was found to have a maximum strength of 91 MPa and an elongation at break of 9%. The crystallinity of the coating resin after the heat aging test was determined in the same manner as in Example 14 and found to be 33%. This coated product was low in area drawdown ratio (R1) and insufficient in molecular chain orientation of the coating layer. As a result, its elongation (elongation at break) after the heat aging test became extremely low, and the flexing resistance and flexibility thereof were hence poor.

Example 15:

The same pellets of Polymer P12 and extruder as those used in Example 14, and a conductor wire were used to coat the conductor wire. Coating conditions were as follows:

Cylinder temperature: 330°C
Extrusion rate: 7.0 g/min
Take-off speed: 30 m/min
Area drawdown ratio (R1): 37
Length of parison: 35 mm
Reduced pressure by evacuation between the conductor wire and a coating layer: -1 cmHg.

A coating die used was equipped with a mandrel having an outer diameter of 2.0 mm at its tip and had an inner diameter of 3.5 mm. As the conductor wire, an annealed copper wire for electric wire 0.4 mm across (JIS C3101) was used. The resultant coated product had an outer diameter of 0.62 mm and an even surface.

The conductor wire was drawn out of the coated product to conduct a tensile test of the coating layer. As a result, the coating layer was found to have a yield strength (A) of 54 MPa, a strength at 10% strain (B) of 54 MPa (B/A = 1.00), a maximum strength of 64 MPa and an elongation at break of 300%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 8°C ($\Delta Tc_1$ = -8°C).

After the coated product was subjected to a heat aging test under conditions of 180°C and 96 hours in an air-circulating oven, another tensile test of the coating layer was conducted. As a result, the coating layer was found to have a yield strength (A) of 91 MPa, a strength at 10% strain (B) of 93 MPa (B/A = 1.03), a maximum strength of 99 MPa and an elongation at break of 50%. The crystallinity of the coating resin after the heat aging test was determined and found to be 35%.

Example 16:

The same pellets of Polymer P12 and extruder as those used in Example 14, and a conductor wire were used to coat the conductor wire. Coating conditions were as follows:

Cylinder temperature: 330°C
Extrusion rate: 7.6 g/min
Take-off speed: 60 m/min
Area drawdown ratio (R1): 273
Length of parison: 45 mm
Reduced pressure by evacuation between the conductor wire and a coating layer: -1 cmHg.

A coating die used was equipped with a mandrel having an outer diameter of 4.0 mm at its tip and had an inner diameter of 7.0 mm. As the conductor wire, an annealed copper wire for electric wire 0.4 mm across (JIS C3101) was used. The resultant coated product had an outer diameter of 0.53 mm and an even surface.

The conductor wire was drawn out of the coated product to conduct a tensile test of the coating layer. As a result, the coating layer was found to have a yield strength (A) of 55 MPa, a strength at 10% strain (B) of 58 MPa (B/A = 1.05), a maximum strength of 92 MPa and an elongation at break of 210%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 12°C ($\Delta Tc_1$ = -12°C).

After the coated product was subjected to a heat aging test under conditions of 180°C and 96 hours in an air-circulating oven, another tensile test of the coating layer was conducted. As a result, the coating layer was found to have a yield strength (A) of 90 MPa, a strength at 10% strain (B) of 98 MPa (B/A = 1.09), a maximum strength of 130 MPa and an elongation at break of 90%. The crystallinity of the coating resin after the heat aging test was determined and found to be 35%.

Example 17:

The same pellets of Polymer P12 and extruder as those used in Example 14, and a conductor wire were used to coat the conductor wire. Coating conditions were as follows:

Cylinder temperature: 330°C
Extrusion rate: 7.6 g/min
Take-off speed: 33 m/min
Area drawdown ratio (R1): 72
Length of parison: 40 mm
Reduced pressure by evacuation between the conductor wire and a coating layer: -1 cmHg.

A coating die used was equipped with a mandrel having an outer diameter of 2.8 mm at its tip and had an inner diameter of 4.9 mm. As the conductor wire, an annealed copper wire for electric wire 0.4 mm across (JIS C3101) was used.

Immediately after the coating, the coated product was continuously heat-treated by passing through a heating oven heated to 280°C and having a length of about 3 m (heat-treating conditions: 280°C/5.5 seconds), and then taken up. The resultant coated product had an outer diameter of 0.62 mm and an even surface.

The conductor wire was drawn out of the coated product to conduct a tensile test of the coating layer. As a result, the coating layer was found to have a yield strength (A) of 85 MPa, a strength at 10% strain (B) of 86 MPa (B/A = 1.01), a maximum strength of 100 MPa and an elongation at break of 180%. The crystallinity of the coating resin was determined and found to be 12%.

The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 10°C ($\Delta Tc_1$ = -10°C).

After the coated product was subjected to a heat aging test under conditions of 180°C and 96 hours in an air-circulating oven, another tensile test of the coating layer was conducted. As a result, the coating layer was found to have a yield strength (A) of 91 MPa, a strength at 10% strain (B) of 94 MPa (B/A = 1.03), a maximum strength of 97 MPa and an elongation at break of 70%. The crystallinity of the coating resin after the heat aging test was determined and found to be 33%.

Comparative Example 7:

The same pellets of Polymer P12 and extruder as those used in Example 14, and a conductor wire were used to coat the conductor wire. Coating conditions were as follows:

Cylinder temperature: 330°C
Extrusion rate: 7.6 g/min
Take-off speed: 20 m/min
Area drawdown ratio (R1): 6
Length of parison: 15 mm
Reduced pressure by evacuation between the conductor wire and a coating layer: -2 cmHg.

As the conductor wire, an annealed copper wire for electric wire 0.4 mm across (JIS C3101) was used. A coating die used was equipped with a mandrel having an outer diameter of 0.9 mm at its tip and had an inner diameter of 1.7 mm. The resultant coated product had an outer diameter of 0.73 mm and an even surface.

The conductor wire was drawn out of the coated product to conduct a tensile test of the coating layer. As a result, the coating layer was found to have a yield strength (A) of 55 MPa, a strength at 10% strain (B) of 48 MPa (B/A = 0.87), a maximum strength of 60 MPa and an elongation at break of 300%.

The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 2°C ($\Delta Tc_1$ = -2°C).

After the coated product was subjected to a heat aging test under conditions of 180°C and 96 hours in an air-circulating oven, another tensile test of the coating layer was conducted. As a result, the coating layer was found to have a maximum strength of 88 MPa and an elongation at break of 5%. The crystallinity of the coating resin after the heat aging test was determined and found to be 36%. The area drawdown ratio (R1) of this coated product was as low as 6, while its $\Delta Tc_1$ was as great as -2°C, and so the coating layer was insufficient in molecular chain orientation. As a result, its elongation (elongation at break) after the heat aging test became extremely low, and the flexing resistance and flexibility thereof were hence poor.

Example 18:

Pelletizing:

After 100 parts by weight of Polymer P12 obtained in Synthesis Example 12 were mixed with 1 part by weight of pentaerythritol tristearate (Unistar H476, product of Nippon Oil & Fats Co., Ltd.) for 3 minutes in a tumbler mixer, the resultant mixture was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the pellets thus obtained at 310°C and a shear rate of 400/sec was 32,500 Pa·s.

Metal coating experiment:

The pellets obtained above, the same extruder as that used in Example 14 and a conductor wire were used to coat the conductor wire. Coating conditions were as follows:

Cylinder temperature: 330°C
Extrusion rate: 7.6 g/min
Take-off speed: 33 m/min
Area drawdown ratio (R1): 72
Length of parison: 40 mm
Reduced pressure by evacuation between the conductor wire and a coating layer: -1 cmHg.

A coating die used was equipped with a mandrel having an outer diameter of 2.8 mm at its tip and had an inner diameter of 4.9 mm. As the conductor wire, an annealed copper wire for electric wire 0.4 mm across (JIS C3101) was used. The resultant coated product had an outer diameter of 0.62 mm and an even surface.

The conductor wire was drawn out of the coated product to conduct a tensile test of the coating layer. As a result, the coating layer was found to have a yield strength (A) of 56 MPa, a strength at 10% strain (B) of 58 MPa (B/A = 1.04), a maximum strength of 66 MPa and an elongation at break of 260%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 9°C ($\Delta Tc_1$ = -9°C).

After the coated product was subjected to a heat aging test under conditions of 180°C and 96 hours in an air-circulating oven, another tensile test of the coating layer was conducted. As a result, the coating layer was found to have a yield strength (A) of 90 MPa, a strength at 10% strain (B) of 92 MPa (B/A = 1.02), a maximum strength of 103 MPa and an elongation at break of 100%. The crystallinity of the coating resin after the heat aging test was determined and found to be 35%.

Example 19:

Pelletizing:

After 100 parts by weight of Polymer P12 obtained in Synthesis Example 12 were mixed with 1 part by weight of epoxy-modified polysiloxane (SF8411, product of Toray Industries, Inc.) for 3 minutes in a tumbler mixer, the resultant mixture was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the pellets thus obtained at 310°C and a shear rate of 400/sec was 34,000 Pa·s.

Metal coating experiment:

The pellets obtained above, the same extruder as that used in Example 14 and a conductor wire were used to coat the conductor wire. Coating conditions were as follows:

Cylinder temperature: 330°C
Extrusion rate: 7.6 g/min
Take-off speed: 33 m/min
Area drawdown ratio (R1): 72
Length of parison: 32 mm
Reduced pressure by evacuation between the conductor wire and a coating layer: -1 cmHg.

A coating die used was equipped with a mandrel having an outer diameter of 2.8 mm at its tip and had an inner diameter of 4.9 mm. As the conductor wire, an annealed copper wire for electric wire 0.4 mm across (JIS C3101) was used. The resultant coated product had an outer diameter of 0.62 mm and an even surface.

The conductor wire was drawn out of the coated product to conduct a tensile test of the coating layer. As a result, the coating layer was found to have a yield strength (A) of 56 MPa, a strength at 10% strain (B) of 55 MPa (B/A = 0.98), a maximum strength of 70 MPa and an elongation at break of 260%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 9°C ($\Delta Tc_1$ = -9°C).

After the coated product was subjected to a heat aging test under conditions of 180°C and 96 hours in an air-circulating oven, another tensile test of the coating layer was conducted. As a result, the coating layer was found to have a yield strength (A) of 90 MPa, a strength at 10% strain (B) of 92 MPa (B/A = 1.02), a maximum strength of 110 MPa and an elongation at break of 90%. The crystallinity of the coating resin after the heat aging test was determined and found to be 33%.

Example 20:

Pelletizing:

A mixture obtained by adding 1 part by weight of γ-aminopropyltriethoxysilane (A-1100, product of Nippon Unicar Co., Ltd.) to 100 parts of a mixture of 90 wt.% of Polymer P12 obtained in Synthesis Example 12 and 10 wt.% of an ethylene-tetrafluoroethylene copolymer (Aflon COP, C-88A, product of Asahi Glass Co., Ltd.) was mixed for 3 minutes in a tumbler mixer, and then fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the pellets thus obtained at 310°C and a shear rate of 400/sec was 38,000 Pa·s.

Metal coating experiment:

The pellets obtained above, the same extruder as that used in Example 14 and a conductor wire were used to coat the conductor wire. Coating conditions were as follows:

Cylinder temperature: 330°C
Extrusion rate: 7.6 g/min
Take-off speed: 33 m/min
Area drawdown ratio (R1): 72
Length of parison: 35 mm
Reduced pressure by evacuation between the conductor wire and a coating layer: -1 cmHg.

A coating die used was equipped with a mandrel having an outer diameter of 2.8 mm at its tip and had an inner diameter of 4.9 mm. As the conductor wire, an annealed copper wire for electric wire 0.4 mm across (JIS C3101) was used. The resultant coated product had an outer diameter of 0.62 mm and an even surface.

The conductor wire was drawn out of the coated product to conduct a tensile test of the coating layer. As a result, the coating layer was found to have a yield strength (A) of 48 MPa, a strength at 10% strain (B) of 52 MPa (B/A = 1.08), a maximum strength of 62 MPa and an elongation at break of 240%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 12°C ($\Delta Tc_1$ = -12°C).

After the coated product was subjected to a heat aging test under conditions of 180°C and 96 hours in an air-circulating oven, another tensile test of the coating layer was conducted. As a result, the coating layer was found to have a yield strength (A) of 81 MPa, a strength at 10% strain (B) of 85 MPa (B/A = 1.05), a maximum strength of 110 MPa and an elongation at break of 86%. The crystallinity of the coating resin after the heat aging test was determined and found to be 34%.

Example 21:

Synthesis Example (13) of polymer (Polymer P13):

A titanium-lined polymerizer was charged with 370 kg of hydrous sodium sulfide (purity: 46.21%) and 800 kg of NMP, and the temperature of the reaction system was gradually raised up to about 200°C in a nitrogen gas atmosphere, thereby distilling off 141 kg of water together with 53.4 moles of hydrogen sulfide. After a mixed solution of 317.4 kg of p-DCB, 0.79 kg of 1,2,4-trichlorobenzene and 270 kg of NMP was then fed to conduct a polymerization reaction at 220°C for 1 hour, the temperature of the reaction system was raised up to 230°C to conduct the polymerization reaction for 3 hours. After 77 kg of water were then introduced under pressure into the reaction system to conduct the polymerization reaction at 255°C for 1 hour, the temperature of the reaction system was lowered down to 240°C to continue the polymerization reaction for 3 hours. After cooling the reaction system, the liquid reaction mixture was sifted through a screen having an opening of 150 μm (100 mesh) to separate a granular polymer. The thus-separated granular polymer was washed each 4 times with acetone and water, dehydrated and then dried, thereby obtaining a polymer.

Pelletizing:

Polymer P13 obtained above was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the polymer at 310°C and a shear rate of 400/sec was 90,000 Pa·s. The polymer also had a melt viscosity of 430 Pa·s as measured at 310°C and a shear rate of 1200/sec.

Metal coating experiment:

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 330°C

Extrusion rate: 20 g/min
Take-off speed: 25 m/min
Area drawdown ratio (R1): 21
Length of parison: 35 mm
Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 2.8 mm at its tip and had an inner diameter of 4.9 mm. The resultant coated product had an outer diameter of 0.97 mm and an even surface.

The conductor wire was drawn out of the coated product to conduct a tensile test of the coating layer. As a result, the coating layer was found to have a yield strength (A) of 55 MPa, a strength at 10% strain (B) of 58 MPa (B/A = 1.05), a maximum strength of 70 MPa and an elongation at break of 260%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 10°C ($\Delta Tc_1 = -10°C$).

After the coated product was subjected to a heat aging test under conditions of 180°C and 96 hours in an air-circulating oven, another tensile test of the coating layer was conducted. As a result, the coating layer was found to have a yield strength (A) of 92 MPa, a strength at 10% strain (B) of 97 MPa (B/A = 1.05), a maximum strength of 115 MPa and an elongation at break of 80%. The crystallinity of the coating resin after the heat aging test was determined and found to be 34%.

Example 22:

The same pellets of Polymer P13 and extruder as those used in Example 21, and a conductor wire were used to coat the conductor wire. Coating conditions were as follows:

Cylinder temperature: 330°C
Extrusion rate: 7 g/min
Take-off speed: 25 m/min
Area drawdown ratio (R1): 59
Length of parison: 30 mm
Reduced pressure by evacuation between the conductor wire and a coating layer: -2 cmHg.

A coating die used was equipped with a mandrel having an outer diameter of 2.8 mm at its tip and had an inner diameter of 4.9 mm. As the conductor wire, an annealed copper wire for electric wire 0.4 mm across (JIS C3101) was used. The resultant coated product had an outer diameter of 0.66 mm and an even surface.

The conductor wire was drawn out of the coated product to conduct a tensile test of the coating layer. As a result, the coating layer was found to have a yield strength (A) of 55 MPa, a strength at 10% strain (B) of 60 MPa (B/A = 1.09), a maximum strength of 68 MPa and an elongation at break of 230%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 13°C ($\Delta Tc_1 = -13°C$).

After the coated product was subjected to a heat aging test under conditions of 180°C and 96 hours in an air-circulating oven, another tensile test of the coating layer was conducted. As a result, the coating layer was found to have a yield strength (A) of 93 MPa, a strength at 10% strain (B) of 101 MPa (B/A = 1.09), a maximum strength of 130 MPa and an elongation at break of 100%. The crystallinity of the coating resin after the heat aging test was determined and found to be 34%.

Comparative Example 8:

The same pellets of Polymer P13 and extruder as those used in Example 21, and a conductor wire were used to coat the conductor wire. Coating conditions were as follows:

Cylinder temperature: 330°C
Extrusion rate: 30 g/min
Take-off speed: 25 m/min
Area drawdown ratio (R1): 7
Length of parison: 35 mm

Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 2 mm at its tip and had an inner diameter of 3.5 mm. The resultant coated product had an outer diameter of 1.15 mm and an even surface.

The conductor wire was drawn out of the coated product to conduct a tensile test of the coating layer. As a result, the coating layer was found to have a yield strength (A) of 55 MPa, a strength at 10% strain (B) of 51 MPa (B/A = 0.93), a maximum strength of 72 MPa and an elongation at break of 290%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 4°C ($\Delta Tc_1$ = -4°C).

After the coated product was subjected to a heat aging test under conditions of 180°C and 96 hours in an air-circulating oven, another tensile test of the coating layer was conducted. As a result, the coating layer was found to have a yield strength (A) of 91 MPa, a strength at 10% strain (B) of 85 MPa (B/A = 0.93), a maximum strength of 92 MPa and an elongation at break of 11%. The crystallinity of the coating resin after the heat aging test was determined and found to be 34%.

The area drawdown ratio (R1) of this coated product was as low as 7, while its $\Delta Tc_1$ was as great as -4°C, and so the coating layer was insufficient in molecular chain orientation. As a result, its elongation (elongation at break) after the heat aging test became extremely low, and the flexing resistance and flexibility thereof were hence poor.

Example 23:

Synthesis Example (14) of polymer (Polymer P14):

A titanium-lined polymerizer was charged with 371 kg of hydrous sodium sulfide (purity: 46.10%) and 800 kg of NMP, and the temperature of the reaction system was gradually raised up to about 200°C in a nitrogen gas atmosphere, thereby distilling off 142 kg of water together with 54 moles of hydrogen sulfide. After a mixed solution of 318.9 kg of p-DCB, 1.16 kg of 1,2,4-trichlorobenzene and 270 kg of NMP was then fed to conduct a polymerization reaction at 220°C for 1 hour, the temperature of the reaction system was raised up to 230°C to conduct the polymerization reaction for 3 hours. After 77 kg of water were then introduced under pressure into the reaction system to conduct the polymerization reaction at 255°C for 1 hour, the temperature of the reaction system was lowered down to 240°C to continue the polymerization reaction for 3 hours. After cooling the reaction system, the liquid reaction mixture was sifted through a screen having an opening of 150 μm (100 mesh) to separate a granular polymer. The thus-separated granular polymer was washed each 4 times with acetone and water, dehydrated and then dried, thereby obtaining a polymer.

Pelletizing:

After 100 parts by weight of Polymer P14 obtained above were mixed with 1 part by weight of pentaerythritol tristearate (Unistar H476, product of Nippon Oil & Fats Co., Ltd.) for 3 minutes in a tumbler mixer, the resultant mixture was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the pellets thus obtained at 310°C and a shear rate of 400/sec was 150,000 Pa·s. The pellets also had a melt viscosity of 550 Pa.s as measured at 310°C and a shear rate of 1200/sec.

Metal coating experiment:

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 340°C
Extrusion rate: 7.6 g/min
Take-off speed: 33 m/min
Area drawdown ratio (R1): 37
Length of parison: 35 mm
Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 2 mm at its tip and had an inner diameter of 3.5 mm.

The resultant coated product had an outer diameter of 0.62 mm and an even surface.

The conductor wire was drawn out of the coated product to conduct a tensile test of the coating layer. As a result, the coating layer was found to have a yield strength (A) of 54 MPa, a strength at 10% strain (B) of 65 MPa (B/A = 1.20), a maximum strength of 110 MPa and an elongation at break of 220%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 18°C ($\Delta Tc_1$ = -18°C).

After the coated product was subjected to a heat aging test under conditions of 180°C and 96 hours in an air-circulating oven, another tensile test of the coating layer was conducted. As a result, the coating layer was found to have a yield strength (A) of 90 MPa, a strength at 10% strain (B) of 110 MPa (B/A = 1.22), a maximum strength of 150 MPa and an elongation at break of 90%. The crystallinity of the coating resin after the heat aging test was determined and found to be 33%.

Example 24:

The same pellets of Polymer P14 and extruder as those used in Example 23, and a conductor wire were used to coat the conductor wire. Coating conditions were as follows:

Cylinder temperature: 340°C
Extrusion rate: 9 g/min
Take-off speed: 20 m/min
Area drawdown ratio (R1): 19
Length of parison: 20 mm
Reduced pressure by evacuation between the conductor wire and a coating layer: -2 cmHg.

A coating die used was equipped with a mandrel having an outer diameter of 2 mm at its tip and had an inner diameter of 3.5 mm. As the conductor wire, an annealed copper wire for electric wire 0.4 mm across (JIS C3101) was used. The resultant coated product had an outer diameter of 0.77 mm and an even surface.

The conductor wire was drawn out of the coated product to conduct a tensile test of the coating layer. As a result, the coating layer was found to have a yield strength (A) of 54 MPa, a strength at 10% strain (B) of 62 MPa (B/A = 1.15), a maximum strength of 103 MPa and an elongation at break of 240%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 14°C ($\Delta Tc_1$ = -14°C).

After the coated product was subjected to a heat aging test under conditions of 180°C and 96 hours in an air-circulating oven, another tensile test of the coating layer was conducted. As a result, the coating layer was found to have a yield strength (A) of 91 MPa, a strength at 10% strain (B) of 106 MPa (B/A = 1.16), a maximum strength of 130 MPa and an elongation at break of 110%. The crystallinity of the coating resin after the heat aging test was determined and found to be 33%.

Example 25:

Synthesis Example (15) of polymer (Polymer P15):

A titanium-lined polymerizer was charged with 373 kg of hydrous sodium sulfide (purity: 46.10%) and 800 kg of NMP, and the temperature of the reaction system was gradually raised up to about 200°C in a nitrogen gas atmosphere, thereby distilling off 143 kg of water together with 53.8 moles of hydrogen sulfide. After a mixed solution of 320.7 kg of p-DCB, 0.39 kg of 1,2,4-trichlorobenzene and 266 kg of NMP was then fed to conduct a polymerization reaction at 220°C for 1 hour, the temperature of the reaction system was raised up to 230°C to conduct the polymerization reaction for 3 hours. After 77.5 kg of water were then introduced under pressure into the reaction system to conduct the polymerization reaction at 255°C for 1 hour, the temperature of the reaction system was lowered down to 240°C to continue the polymerization reaction for 3 hours. After cooling the reaction system, the liquid reaction mixture was sifted through a screen having an opening of 150 μm (100 mesh) to separate a granular polymer. The thus-separated granular polymer was washed each 4 times with acetone and water, dehydrated and then dried, thereby obtaining a polymer.

Pelletizing:

Polymer P15 obtained above was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the polymer thus obtained at 310°C and a shear rate of 400/sec was 11,100 Pa·s. The polymer also had a melt viscosity of 340 Pa.s as measured at 310°C and a shear rate of 1200/sec.

Metal coating experiment:

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 325°C
Extrusion rate: 8.8 g/min
Take-off speed: 40 m/min
Area drawdown ratio (R1): 156
Length of parison: 50 mm
Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 4 mm at its tip and had an inner diameter of 7 mm. The resultant coated product had an outer diameter of 0.6 mm and an even surface.

The conductor wire was drawn out of the coated product to conduct a tensile test of the coating layer. As a result, the coating layer was found to have a yield strength (A) of 55 MPa, a strength at 10% strain (B) of 51 MPa (B/A = 0.93), a maximum strength of 95 MPa and an elongation at break of 300%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 7°C ($\Delta Tc_1$ = -7°C).

This coated product was heat-treated at 150°C for 96 hours. As a result, the tensile properties of the coating layer turned as follows:

Yield strength (A): 88 MPa,
Strength at 10% strain (B): 84 MPa (B/A = 0.95),
Elongation at break: 100%.

At this time, the coating resin had a crystallinity of 28%.

After the coated product was subjected to a heat aging test under conditions of 180°C and 96 hours in an air-circulating oven, another tensile test of the coating layer was conducted. As a result, the coating layer was found to have a yield strength (A) of 92 MPa, a strength at 10% strain (B) of 91 MPa (B/A = 0.99), a maximum strength of 98 MPa and an elongation at break of 43%. The crystallinity of the coating resin after the heat aging test was determined and found to be 34%.

Example 26:

The same pellets of Polymer P15 and extruder as those used in Example 25, and a conductor wire were used to coat the conductor wire. Coating conditions were as follows:

Cylinder temperature: 325°C
Extrusion rate: 8.8 g/min
Take-off speed: 80 m/min
Area drawdown ratio (R1): 299
Length of parison: 53 mm
Reduced pressure by evacuation between the conductor wire and a coating layer: -1 cmHg.

A coating die used was equipped with a mandrel having an outer diameter of 4 mm at its tip and had an inner diameter of 7 mm. As the conductor wire, an annealed copper wire for electric wire 0.4 mm across (JIS C3101) was used. The resultant coated product had an outer diameter of 0.52 mm and an even surface.

The conductor wire was drawn out of the coated product to conduct a tensile test of the coating layer. As a result, the coating layer was found to have a yield strength (A) of 55 MPa, a strength at 10% strain (B) of 53 MPa (B/A = 0.96), a maximum strength of 97 MPa and an elongation at break of 260%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 10°C ($\Delta Tc_1$ = -10°C).

After the coated product was subjected to a heat aging test under conditions of 180°C and 96 hours in an air-circulating oven, another tensile test of the coating layer was conducted. As a result, the coating layer was found to have a yield strength (A) of 91 MPa, a strength at 10% strain (B) of 92 MPa (B/A = 1.01), a maximum strength of 105 MPa and an elongation at break of 56%. The crystallinity of the coating resin after the heat aging test was determined and found to be 35%.

Comparative Example 9:

The same pellets of Polymer P15 and extruder as those used in Example 25, and a conductor wire were used to coat the conductor wire. Coating conditions were as follows:

Cylinder temperature: 325°C
Extrusion rate: 8.8 g/min
Take-off speed: 15 m/min
Area drawdown ratio (R1): 59
Length of parison: 40 mm
Reduced pressure by evacuation between the conductor wire and a coating layer: -1 cmHg.

A coating die used was equipped with a mandrel having an outer diameter of 4 mm at its tip and had an inner diameter of 7 mm. As the conductor wire, an annealed copper wire for electric wire 0.4 mm across (JIS C3101) was used. The resultant coated product had an outer diameter of 0.86 mm and an even surface.

The conductor wire was drawn out of the coated product to conduct a tensile test of the coating layer. As a result, the coating layer was found to have a yield strength (A) of 58 MPa, a strength at 10% strain (B) of 48 MPa (B/A = 0.83), a maximum strength of 86 MPa and an elongation at break of 320%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 4°C ($\Delta Tc_1$ = -4°C).

After the coated product was subjected to a heat aging test under conditions of 180°C and 96 hours in an air-circulating oven, another tensile test of the coating layer was conducted. As a result, the coating layer was found to have a maximum strength of 76 MPa and an elongation at break of 6%. The crystallinity of the coating resin after the heat aging test was determined and found to be 34%.

The area drawdown ratio (R1) of this coated product was as low as 59, while its $\Delta Tc_1$ was as great as -4°C, and so the coating layer was insufficient in molecular chain orientation. As a result, its elongation (elongation at break) after the heat aging test became extremely low, and the flexing resistance and flexibility thereof were hence poor.

Comparative Example 10:

Synthesis Example (16) of Polymer (Polymer P16):

A titanium-lined polymerizer was charged with 390 kg of hydrous sodium sulfide (purity: 46.40%) and 800 kg of NMP, and the temperature of the reaction system was gradually raised up to about 200°C in a nitrogen gas atmosphere, thereby distilling off 147 kg of water together with 57.2 moles of hydrogen sulfide. A mixed solution of 337.5 kg of p-DCB and 219 kg of NMP was then fed to conduct a polymerization reaction at 220°C for 4.5 hour. After 80.8 kg of water were then introduced under pressure into the reaction system to conduct the polymerization reaction at 255°C for 2 hours, the temperature of the reaction system was lowered down to 245°C to continue the polymerization reaction for 11 hours. After cooling the reaction system, the liquid reaction mixture was sifted through a screen having an opening of 150 μm (100 mesh) to separate a granular polymer. The thus-separated granular polymer was washed each 4 times with acetone and water, dehydrated and then dried, thereby obtaining a polymer.

Pelletizing:

Polymer P16 obtained above was fed to a twin-screw kneader extruder (TEX-44, manufactured by The Japan Steel Works, Ltd.) having a cylinder bore of 44 mm and kneaded at a cylinder temperature of 300-330°C to produce pellets. The elongational viscosity of the polymer thus obtained at 310°C and a shear rate of 400/sec was 8,990 Pa·s. The polymer also had a melt viscosity of 390 Pa·s as measured at 310°C and a shear rate of 1200/sec.

Metal coating experiment:

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 325°C
Extrusion rate: 8.8 g/min
Take-off speed: 40 m/min
Area drawdown ratio (R1): 156
Length of parison: 45 mm
Reduced pressure by evacuation between the conductor wire and a coating layer: -1 cmHg.

As the conductor wire, an annealed copper wire for electric wire 0.4 mm across (JIS C3101) was used. A coating die used was equipped with a mandrel having an outer diameter of 4 mm at its tip and had an inner diameter of 7 mm. The resultant coated product had an outer diameter of 0.61 mm and an even surface.

The conductor wire was drawn out of the coated product to conduct a tensile test of the coating layer. As a result, the coating layer was found to have a yield strength (A) of 53 MPa, a strength at 10% strain (B) of 42 MPa (B/A = 0.79), a maximum strength of 90 MPa and an elongation at break of 300%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 3°C ($\Delta Tc_1 = -3°C$).

After the coated product was subjected to a heat aging test under conditions of 180°C and 96 hours in an air-circulating oven, another tensile test of the coating layer was conducted. As a result, the coating layer was found to have a maximum strength of 86 MPa and an elongation at break of 6%. The crystallinity of the coating resin after the heat aging test was determined and found to be 34%.

This coated product was low in the elongational viscosity of the resin and great in $\Delta Tc_1$. As a result, its elongation (elongation at break) after the heat aging test became extremely low, and the flexing resistance and flexibility thereof were hence poor.

Comparative Example 11:

Synthesis Example (17) of polymer (Polymer P17):

A titanium-lined polymerizer was charged with 420 kg of hydrous sodium sulfide (purity: 46.21%) and 720 kg of NMP, and the temperature of the reaction system was gradually raised up to about 200°C in a nitrogen gas atmosphere, thereby distilling off 160 kg of water together with 61.8 moles of hydrogen sulfide. A mixed solution of 363.6 kg of p-DCB and 250 kg of NMP was then fed to conduct a polymerization reaction at 220°C for 4.5 hour. Then, 56.5 kg of water were then introduced under pressure into the reaction system to conduct the polymerization reaction at 255°C for 5 hours. After cooling the reaction system, the liquid reaction mixture was sifted through a screen having an opening of 150 μm (100 mesh) to separate a granular polymer. The thus-separated granular polymer was washed 3 times with acetone, twice with water, once with a 0.6% aqueous solution of ammonium chloride, twice with water and once with a 0.06% aqueous solution of ammonium chloride, dehydrated and then dried, thereby obtaining a polymer.

Pelletizing:

Polymer P17 obtained above was fed to a twin-screw kneader extruder (TEX-44, manufactured by The Japan Steel Works, Ltd.) having a cylinder bore of 44 mm and kneaded at a cylinder temperature of 300-320°C to produce pellets. The elongational viscosity of the polymer thus obtained at 310°C and a shear rate of 400/sec was 4,000 Pa·s. The polymer also had a melt viscosity of 150 Pa·s as measured at 310°C and a shear rate of 1200/sec.

Metal coating experiment:

The pellets obtained above were fed to a bench twin-screw extruder (MP-2015, manufactured by Tsubako·APV Co.) equipped with a wire coating die to coat a conductor wire. Coating conditions were as follows:

Cylinder temperature: 310°C
Extrusion rate: 8.8 g/min
Take-off speed: 40 m/min

Area drawdown ratio (R1): 156
Length of parison: 15 mm
Reduced pressure by evacuation between the conductor wire and a coating layer: -5 cmHg.

As the conductor wire, an annealed copper wire for electric wire 0.4 mm across (JIS C3101) was used. A coating die used was equipped with a mandrel having an outer diameter of 4 mm at its tip and had an inner diameter of 7 mm. During the coating process, breaking of resin occurred at a frequency of twice/hour. The resultant coated product had an outer diameter of 0.61 mm and an even surface.

The conductor wire was drawn out of the coated product to conduct a tensile test of the coating layer. As a result, the coating layer was found to have a yield strength (A) of 54 MPa, a strength at 10% strain (B) of 43 MPa (B/A = 0.80), a maximum strength of 72 MPa and an elongation at break of 300%. The conductor wire was drawn out of the coated product to determine a difference between the crystallization temperatures upon heating of the coating layer and an unorientated pressed sheet of the polymer. As a result, the crystallization temperature upon heating of the coating layer was found to be lower than that of the unorientated pressed sheet by 2°C ($\Delta Tc_1$ = -2°C).

After the coated product was subjected to a heat aging test under conditions of 180°C and 96 hours in an air-circulating oven, another tensile test of the coating layer was conducted. As a result, the coating layer was found to have a maximum strength of 78 MPa and an elongation at break of 4%. The crystallinity of the coating resin after the heat aging test was determined and found to be 34%.

This coated product was low in the elongational viscosity of the resin and great in $\Delta Tc_1$. As a result, its elongation (elongation at break) after the heat aging test became extremely low, and the flexing resistance and flexibility thereof were hence poor.

The results of these experiments are given collectively in Tables 5-7.

Table 5

|  | Ex.14 | Comp. Ex. 6 | Ex. 15 | Ex. 16 | Ex. 17 | Comp. Ex. 7 |
|---|---|---|---|---|---|---|
| Pellets: |  |  |  |  |  |  |
|    Kind PAS resin | P12 | P12 | P12 | P12 | P12 | P12 |
|    Amount added | 100 | 100 | 100 | 100 | 100 | 100 |
| Melt viscosity $\eta^*$ (Pa·s) | 360 | 360 | 360 | 360 | 360 | 360 |
| Elongational viscosity $\lambda_{400}$ (KPa·s) | 33 | 33 | 33 | 33 | 33 | 33 |
| Wire coating: |  |  |  |  |  |  |
| Area drawdown ratio R1 | 72 | 22 | 37 | 273 | 72 | 6 |
| Properties of coated product: |  |  |  |  |  |  |
| $\Delta Tc_1$ | -11 | -5 | -8 | -12 | -10 | -2 |
| Yield strength (A) (MPa) | 55 | 55 | 54 | 55 | 85 | 55 |
| Strength at 10% strain (B) (MPa) | 56 | 51 | 54 | 58 | 86 | 48 |
| (B)/(A) | 1.02 | 0.93 | 1.00 | 1.06 | 1.01 | 0.87 |
| Max. strength (MPa) | 67 | 72 | 64 | 92 | 100 | 60 |
| Elongation at break (%) | 250 | 310 | 300 | 210 | 180 | 300 |
| Properties after 180°C x 96 hours: |  |  |  |  |  |  |
| Yield strength (A) (MPa) | 91 | - | 91 | 90 | 91 | - |
| Strength at 10% strain (B) (MPa) | 94 | - | 93 | 98 | 94 | - |
| (B)/(A) | 1.03 | - | 1.02 | 1.08 | 1.03 | - |
| Max. strength (MPa) | 98 | 91 | 99 | 130 | 97 | 88 |
| Elongation at break (%) | 80 | 9 | 50 | 90 | 70 | 5 |
| Crystallinity (%) | 34 | 33 | 35 | 35 | 33 | 36 |

Table 6

| | | Ex.18 | Ex.19 | Ex.20 | Ex.21 | Ex.22 | Comp. Ex. 8 |
|---|---|---|---|---|---|---|---|
| **Pellets:** | | | | | | | |
| PAS resin | Kind | P12 | P12 | P12 | P13 | P13 | P13 |
| | Amount added | 100 | 100 | 90 | 100 | 100 | 100 |
| Additive | Kind(*1) | – | – | ETFE | – | – | – |
| | Amount added | – | – | 10 | – | – | – |
| | Kind(*2) | PETS | EMPS | γAPES | – | – | EMPS |
| | Amount added | 1 | 1 | 1 | – | – | 1 |
| Melt viscosity $\eta^*$ (Pa·s) | | 350 | 360 | 380 | 430 | 430 | 430 |
| Elongational viscosity $\lambda_{400}$ (KPa·s) | | 32.5 | 34 | 38 | 90 | 90 | 90 |
| **Wire coating:** | | | | | | | |
| Area drawdown ratio R1 | | 72 | 72 | 72 | 21 | 59 | 7 |
| **Properties of coated product:** | | | | | | | |
| $\Delta Tc_1$ | | -9 | -9 | -12 | -10 | -13 | -4 |
| Yield strength (A) (MPa) | | 56 | 56 | 48 | 55 | 55 | 55 |
| Strength at 10% strain (B) (MPa) | | 58 | 55 | 52 | 58 | 60 | 51 |
| (B)/(A) | | 1.04 | 0.98 | 1.08 | 1.06 | 1.09 | 0.93 |
| Max. strength (MPa) | | 66 | 70 | 62 | 70 | 68 | 72 |
| Elongation at break (%) | | 260 | 260 | 240 | 260 | 230 | 290 |
| **Properties after 180°C x 96 hours:** | | | | | | | |
| Yield strength (A) (MPa) | | 90 | 90 | 81 | 92 | 93 | 91 |
| Strength at 10% strain (B) (MPa) | | 92 | 92 | 85 | 97 | 101 | 85 |
| (B)/(A) | | 1.02 | 1.02 | 1.05 | 1.05 | 1.09 | 0.93 |
| Max. strength (MPa) | | 103 | 102 | 110 | 115 | 130 | 92 |
| Elongation at break (%) | | 100 | 90 | 86 | 80 | 100 | 11 |
| Crystallinity (%) | | 35 | 33 | 34 | 34 | 34 | 34 |

Table 7

| | Ex.23 | Ex.24 | Ex.25 | Ex.26 | Comp. Ex. 9 | Comp. Ex.10 | Comp. Ex.11 |
|---|---|---|---|---|---|---|---|
| **Pellets:** | | | | | | | |
| PAS resin Kind | P14 | P14 | P15 | P15 | P15 | P16 | P17 |
| PAS resin Amount added | 100 | 100 | 100 | 100 | 100 | 100 | 100 |
| Addi-tive Kind(*2) | PETS | PETS | - | - | - | - | - |
| Addi-tive Amount added | 1 | 1 | - | - | - | - | - |
| Melt viscosity $\eta^*$ (Pa·s) | 550 | 550 | 340 | 340 | 340 | 390 | 150 |
| Elongational viscosity $\lambda_{400}$ (KPa·s) | 150 | 150 | 11.1 | 11.1 | 11.1 | 8.99 | 4.0 |
| **Wire coating:** | | | | | | | |
| Area drawdown ratio R1 | 37 | 19 | 156 | 299 | 59 | 156 | 156 |
| **Properties of coated product:** | | | | | | | |
| $\Delta Tc_1$ | -18 | -14 | -7 | -10 | -4 | -3 | -2 |
| Yield strength (A) (MPa) | 54 | 54 | 55 | 55 | 58 | 53 | 54 |
| Strength at 10% strain (B) (MPa) | 65 | 62 | 51 | 53 | 48 | 42 | 43 |
| (B)/(A) | 1.20 | 1.15 | 0.93 | 0.96 | 0.83 | 0.79 | 0.80 |
| Max. strength (MPa) | 110 | 103 | 95 | 97 | 86 | 90 | 72 |
| Elongation at break (%) | 220 | 240 | 300 | 260 | 320 | 300 | 130 |
| **Properties after 180°C x 96 hours:** | | | | | | | |
| Yield strength (A) (MPa) | 90 | 91 | 92 | 91 | - | - | - |
| Strength at 10% strain (B) (MPa) | 110 | 106 | 91 | 92 | - | - | - |
| (B)/(A) | 1.22 | 1.17 | 0.99 | 1.01 | - | - | - |
| Max. strength (MPa) | 150 | 130 | 98 | 105 | 76 | 86 | 78 |
| Elongation at break (%) | 90 | 110 | 43 | 56 | 6 | 6 | 4 |
| Crystallinity (%) | 33 | 33 | 34 | 35 | 34 | 34 | 34 |

**(Note):**

    (*1)  ETFE: An ethylene-tetrafluoroethylene copolymer

    (*2)  PETS: Pentaerythritol tristearate

           EMPS: Epoxy-modified polysiloxane

           $\gamma$APES: $\gamma$-Aminopropyltriethoxysilane.

**Claims**

1. A metal coating resin comprising a branched poly(arylene sulfide) resin obtained by polymerizing an alkali metal sulfide and a dihalo-aromatic compound in the presence of a trihalo-aromatic compound, wherein the poly(arylene sulfide) resin has a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \tag{1}$$

2. The metal coating resin according to Claim 1, wherein the branched poly(arylene sulfide) resin is a polymer obtained by polymerizing the alkali metal sulfide and the dihalo-aromatic compound in the presence of the trihalo-aromatic compound under control in such a manner that a ratio a/b of the number of moles a of the dihalo-aromatic compound charged to the number of moles b of the alkali metal sulfide charged falls within a range of 0.95-1.10, and the amount of the trihalo-aromatic compound charged falls within a range of 0.0002-0.01 moles per mole of the alkali metal sulfide charged.

3. A coated metal member obtained by coating a metal base with a metal coating resin comprising a branched poly(arylene sulfide) resin obtained by polymerizing an alkali metal sulfide and a dihalo-aromatic compound in the presence of a trihalo-aromatic compound, wherein the poly(arylene sulfide) resin has a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \tag{1}.$$

4. The coated metal member according to Claim 3, wherein the branched poly(arylene sulfide) resin is a polymer obtained by polymerizing the alkali metal sulfide and the dihalo-aromatic compound in the presence of the trihalo-aromatic compound under control in such a manner that a ratio a/b of the number of moles a of the dihalo-aromatic compound charged to the number of moles b of the alkali metal sulfide charged falls within a range of 0.95-1.10, and the amount of the trihalo-aromatic compound charged falls within a range of 0.0002-0.01 moles per mole of the alkali metal sulfide charged.

5. The coated metal member according to Claim 3, wherein the crystallinity of the resin coated on the metal base falls within a range of 15-30%.

6. The coated metal member according to Claim 3, which is a coated wire comprising a conductor wire as the metal base.

7. A process for producing a coated metal member, which comprises coating a metal base with a metal coating resin comprising a branched poly(arylene sulfide) resin obtained by polymerizing an alkali metal sulfide and a dihalo-aromatic compound in the presence of a trihalo-aromatic compound, wherein the poly(arylene sulfide) resin has

a melt viscosity $\eta_{200}$ of 50-3,000 Pa·s as measured at 310°C and a shear rate of 200/sec, and a ratio R ($\eta_{200}/\eta_{1200}$) of the melt viscosity $\eta_{200}$ to a melt viscosity $\eta_{1200}$ as measured at 310°C and a shear rate of 1200/sec satisfies the following relationship (1):

$$0.91 \times \log(\eta_{200}) - 0.3 \leq R \leq 0.91 \times \log(\eta_{200}) + 0.3 \qquad (1).$$

8. The process according to Claim 7, wherein the branched poly(arylene sulfide) resin is a polymer obtained by polymerizing the alkali metal sulfide and the dihalo-aromatic compound in the presence of the trihalo-aromatic compound under control in such a manner that a ratio a/b of the number of moles a of the dihalo-aromatic compound charged to the number of moles b of the alkali metal sulfide charged falls within a range of 0.95-1.10, and the amount of the trihalo-aromatic compound charged falls within a range of 0.0002-0.01 moles per mole of the alkali metal sulfide charged.

9. The process according to Claim 7, wherein the branched poly(arylene sulfide) resin is melted at a temperature ranging from (the melting point of the resin + 5°C) to 370°C by means of an extruder, and then extruded through a die of the extruder to continuously coat the metal base while forming a parison.

10. The process according to Claim 9, wherein after coating the metal base, the coated metal member is heat-treated at a temperature ranging from 120 to 290°C.

11. The process according to Claim 10, wherein the crystallinity of the coating layer formed of the poly(arylene sulfide) resin is controlled within a range of 15-30% by the heat treatment.

12. The process according to Claim 10, wherein the heat-treating temperature is controlled within a range of 200-270°C.

13. The process according to Claim 7, wherein a conductor wire is used as the metal base to coat the conductor wire with the metal coating resin comprising the poly(arylene sulfide) resin, thereby obtaining a coated wire.

14. A coated metal member obtained by coating a metal base with a poly(arylene sulfide) resin, wherein the poly(arylene sulfide) resin has an elongational viscosity of at least 10,000 Pa·s as measured at 310°C and a shear rate of 400/sec, and a crystallization temperature upon heating of a coating layer formed of the poly(arylene sulfide) resin, which is measured by means of a differential scanning calorimeter, is lower by at least 6°C than that of an unorientated noncrystalline sheet of the poly(arylene sulfide) resin.

15. The coated metal member according to Claim 14, wherein the strength at 10% strain of the coating layer formed of the poly(arylene sulfide) resin is at least 0.93 times the yield strength of the coating layer.

16. The coated metal member according to Claim 14, wherein the crystallinity of the coating layer formed of the poly(arylene sulfide) resin after heat-treated at a heat-treating temperature of 120-290°C falls within a range of 10-40%.

17. The coated metal member according to Claim 15, wherein the strength at 10% strain of the coating layer formed of the poly(arylene sulfide) resin after heat-treated is at least 0.95 times the yield strength of the coating layer.

18. The coated metal member according to Claim 16, wherein the elongation at break of the coating layer formed of the poly(arylene sulfide) resin after heat-treated is at least 30%.

19. The coated metal member according to Claim 14, wherein the poly(arylene sulfide) resin is a branched poly(arylene sulfide) resin obtained by polymerizing an alkali metal sulfide and a dihalo-aromatic compound in the presence of a trihalo-aromatic compound.

20. The coated metal member according to Claim 19, wherein the branched poly(arylene sulfide) resin is a polymer obtained by polymerizing the alkali metal sulfide and the dihalo-aromatic compound in the presence of the trihalo-aromatic compound under control in such a manner that a ratio a/b of the number of moles a of the dihalo-aromatic compound charged to the number of moles b of the alkali metal sulfide charged falls within a range of 0.95-1.10, and the amount of the trihalo-aromatic compound charged falls within a range of 0.0002-0.01 moles per mole of the alkali metal sulfide charged.

21. The coated metal member according to Claim 14, which is a coated wire comprising a conductor wire as the metal base.

22. The coated metal member according to Claim 15, which is obtained by coating the metal base with the poly(arylene sulfide) resin so as to satisfy the following relationships (I) and (II):

$$B/A \geq 0.93 \tag{I}$$

$$\ln R1 \geq [B/A - \{0.38453 + 0.11599 \ln\lambda_{400}\}]/ \{0.05225 \ln\lambda_{400}\} \tag{II}$$

wherein A is a yield strength (MPa) of the coating layer formed of the poly(arylene sulfide) resin, B is a strength (MPa) at 10% strain of the coating layer formed of the poly(arylene sulfide) resin, $\lambda_{400}$ is an elongational viscosity (Pa·s) of the poly(arylene sulfide) resin as measured at 310°C and a shear rate of 400/sec, and R1 is an area drawdown ratio (%) upon coating of the poly(arylene sulfide) resin.

23. A process for producing a coated metal member, which comprises coating a metal base with a poly(arylene sulfide) resin having an elongational viscosity of at least 10,000 Pa·s as measured at 310°C and a shear rate of 400/sec, so as to satisfy the following relationships (I) and (II):

$$B/A \geq 0.93 \tag{I}$$

$$\ln R1 \geq [B/A - \{0.38453 + 0.11599 \ln\lambda_{400}\}]/ \{0.05225 \ln\lambda_{400}\} \tag{II}$$

wherein A is a yield strength (MPa) of the coating layer formed of the poly(arylene sulfide) resin, B is a strength (MPa) at 10% strain of the coating layer formed of the poly(arylene sulfide) resin, $\lambda_{400}$ is an elongational viscosity (Pa·s) of the poly(arylene sulfide) resin as measured at 310°C and a shear rate of 400/sec, and R1 is an area drawdown ratio (%) upon coating of the poly(arylene sulfide) resin, wherein a crystallization temperature upon heating of the coating layer formed of the poly(arylene sulfide) resin, which is measured by means of a differential scanning calorimeter, is lower by at least 6°C than that of an unorientated noncrystalline sheet of the poly(arylene sulfide) resin, and the strength at 10% strain of the coating layer formed of the poly(arylene sulfide) resin is at least 0.93 times the yield strength of the coating layer.

24. The process according to Claim 23, wherein the poly(arylene sulfide) resin is a branched resin obtained by polymerizing an alkali metal sulfide and a dihalo-aromatic compound in the presence of a trihalo-aromatic compound under control in such a manner that a ratio a/b of the number of moles a of the dihalo-aromatic compound charged to the number of moles b of the alkali metal sulfide charged falls within a range of 0.95-1.10, and the amount of the trihalo-aromatic compound charged falls within a range of 0.0002-0.01 moles per mole of the alkali metal sulfide charged.

25. The process according to Claim 23, wherein the poly(arylene sulfide) resin is melted at a temperature ranging from (the melting point of the resin + 5°C) to 370°C by means of an extruder, and then extruded through a die of the extruder to continuously coat the metal base while forming a parison.

26. The process according to Claim 23, wherein after coating the metal base, the coated metal member is heat-treated at a temperature ranging from 120 to 290°C.

27. The process according to Claim 23, wherein the crystallinity of the coating layer formed of the poly(arylene sulfide) resin is controlled within a range of 10-40% by the heat treatment.

28. The process according to Claim 23, wherein a conductor wire is used as the metal base to coat the conductor wire with the metal coating resin comprising the poly(arylene sulfide) resin, thereby obtaining a coated wire.

Fig.1